(19) Europäisches Patentamt
European Patent Office
Office européen des brevets

(11) **EP 4 410 880 A1**

(12) **EUROPEAN PATENT APPLICATION**
published in accordance with Art. 153(4) EPC

(43) Date of publication:
**07.08.2024 Bulletin 2024/32**

(21) Application number: **22876505.3**

(22) Date of filing: **29.09.2022**

(51) International Patent Classification (IPC):
***C08J 9/26*** (2006.01)

(52) Cooperative Patent Classification (CPC):
**C08J 9/26**

(86) International application number:
**PCT/JP2022/036587**

(87) International publication number:
**WO 2023/054642 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159432**

(71) Applicant: **Asahi Kasei Kabushiki Kaisha Tokyo 1000006 (JP)**

(72) Inventor: **KAWAGUCHI, Ryoma Tokyo 100-0006 (JP)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **POLYOLEFIN FILM AND METHOD FOR PRODUCING POLYOLEFIN FILM**

(57)    A polyolefin film containing a polyolefin, wherein the polyolefin contains polyethylene, a melting point of the polyolefin film is 134°C or higher and 140°C or lower, a basis weight-equivalent puncture strength Sm of the polyolefin film is 70 gf/(g/m$^2$) or more and 150 gf/(g/m$^2$) or less, and a shutdown temperature Ts and the Sm of the polyolefin film satisfy the following relationship: Ts < $0.13 \times$ Sm + 130.

[Figure 3]

EP 4 410 880 A1

## Description

Technical Field

The present invention relates to a polyolefin film and a method for manufacturing a polyolefin film.

Background Art

Electricity storage devices, a representative example being lithium ion secondary batteries (LiBs), have been actively developed in recent years. An electricity storage device generally includes a power generating element having a separator interposed between a positive electrode and a negative electrode and being impregnated with an electrolyte solution. The separator has fine pores formed therein, and serves to allow lithium ions to permeate during normal use of the electricity storage device and to block permeation of lithium ions to prevent thermal runaway during abnormal heat generation of the electricity storage device.

Various polyolefin materials have been studied as materials for separators. Usually, specifications such as composition of the polyolefin are appropriately adjusted according to intended balance of physical properties. For example, an increase in the capacity of electricity storage devices is underway both for consumer use and for mounting on vehicles, and thinner separators are being pursued along with this. Such thinner separators are required to have a higher strength per basis weight in order to maintain a mechanical strength. Here, use of high molecular weight polyethylene, low temperature stretching, sequential stretching, or the like is possible as a method for achieving a thin film with a high strength. However, in an attempt to prepare a thin film with a high strength by such an approach, a shutdown temperature tends to become higher as trade-off thereof, reducing safety in a high temperature state. An approach of allowing a shutdown temperature to decrease using polyethylene having a low melting point is used to solve such a problem. As for such a technique, for example, Patent Literature 1 proposes use of high molecular weight polyethylene having a viscosity average molecular weight of from 500,000 to 2,500,000 and a polyolefin having a melt index of from 2 g/10 min to 50 g/10 min and a melting point of from 120°C to 137°C in combination in a microporous polyolefin film from the viewpoint of the balance among a low temperature fuse function, a sufficient mechanical strength, and satisfactory heat resistance. Patent Literature 2 proposes a porous polyolefin film wherein a porosity $\Phi$ (%) of the porous polyolefin film, a shutdown temperature $T_{SD}$ (°C), and the lowest melting point Tm (°C) among the respective melting points of layers satisfy a predetermined relationship from the viewpoint of the balance between safety and output characteristics when used as a separator for a battery. Patent Literature 3 proposes a composite porous polyolefin membrane comprising a first layer comprising polypropylene (A), first high density polyethylene (B) having a melting point of 130°C or higher, and second high density polyethylene (C) having a melting point of 120°C or higher and lower than 130°C, and a second layer comprising polyethylene (D), wherein the first layer and the second layer are integrally laminated with each other, from the viewpoint of the balance among resistance to external short circuits, high temperature heat resistance, and impact resistance.

Citation List

Patent Literature

Patent Literature 1: Japanese Patent Laid-Open No. 2018-141029
Patent Literature 2: Japanese Patent Laid-Open No. 2019-143142
Patent Literature 3: International Publication No. WO 2019/093184

Summary of Invention

Technical Problem

Use of a resin having a low melting point as described in Patent Literatures 1 to 3, albeit attaining a decrease in shutdown temperature, tends to deteriorate a heat shrinkage rate or permeability because a temperature in a heat setting step cannot be elevated in a film formation process. Here, it may be possible to blend the resin having a low melting point with high molecular weight polyethylene or the like in order to exert a strength. In this case, however, the onset temperature of swelling by a plasticizer largely differs between the resin having a low melting point and the high molecular weight polyethylene. This tends to cause unmelted gel defects ascribable to insufficient swelling. As mentioned above, the techniques described in Patent Literatures 1 to 3 are still susceptible to improvement from the viewpoint of achieving both a low shutdown temperature and a high strength while avoiding deterioration in heat shrinkage rate or permeability.

The present invention has been made in view of the problems of the conventional art described above, and an object is to provide a polyolefin film excellent in the balance among a heat shrinkage rate, permeability, a shutdown temperature, and a strength.

Solution to Problem

As a result of having conducted diligent research to solve the above problems, the present inventors have found that the above problems can be solved by a polyolefin film configured such that a melting point and a basis weight-equivalent strength fall within predetermined ranges while a shutdown temperature and the basis weight-equivalent strength satisfy a predetermined relationship, and have completed the present invention.

That is, the present invention includes the following aspects.

[1] A polyolefin film comprising a polyolefin, wherein

the polyolefin comprises polyethylene,
a melting point of the polyolefin film is 134°C or higher and 140°C or lower,
a basis weight-equivalent puncture strength $Sm$ of the polyolefin film is 70 $gf/(g/m^2)$ or more and 150 $gf/(g/m^2)$ or less, and
a shutdown temperature $Ts$ and the $Sm$ of the polyolefin film satisfy the following relationship:
$Ts < 0.13 \times Sm + 130$.

[2] The polyolefin film according to [1], wherein a total amount of a side chain having 3 carbon atoms and a side chain having 4 carbon atoms measured for the polyolefin film is 0.1 mol% or less as a proportion to a total number of carbon atoms.

[3] The polyolefin film according to [1] or [2], wherein the polyethylene comprises polyethylene A and polyethylene B different from the polyethylene A, wherein

the polyethylene A is homopolyethylene having a melting point of 134°C or higher and 138°C or lower and a melt index of 0.5 g/10 min or more and 50 g/10 min or less, and
a content of the polyethylene A based on 100 parts by mass in total of the polyethylene A and the polyethylene B is 20 parts by mass or more and 80 parts by mass or less.

[4] The polyolefin film according to [3], wherein

the polyethylene B is homopolyethylene having a viscosity average molecular weight of 800,000 or more and 5,000,000 or less, and
a content of the polyethylene B based on 100 parts by mass in total of the polyethylene A and the polyethylene B is 20 parts by mass or more and 80 parts by mass or less.

[5] The polyolefin film according to any of [1] to [4], wherein a heat shrinkage rate at 120°C is 10% or less.

[6] The polyolefin film according to any of [1] to [5], wherein a film thickness-equivalent air permeability $Gt$ and a porosity $P$ of the polyolefin film satisfy the following relationship:

$$LN(Gt) \leq -0.070 \times P + 5.8.$$

[7] The polyolefin film according to any of [3] to [6], wherein a difference in swelling onset temperature between the polyethylene A and the polyethylene B determined by the following measurement is 10°C or less:

[Measurement of swelling onset temperature]
(Measurement of $D_{10}$, $D_{50}$, and $D_{90}$)

Respective particle diameters of the polyethylene A and the polyethylene B are measured using a laser particle size distribution analyzer with methanol as a dispersion medium. A cumulative particle size distribution from smaller particle sizes is prepared on the basis of the measurement, and particle diameters that attain cumulative percentages of 10%, 50%, and 90% are defined as $D_{10}$, $D_{50}$, and $D_{90}$, respectively, of each polyethylene.

(Measurement of swelling onset temperature T)

A swelling onset temperature $T_{10}$ of a polyethylene particle having a particle diameter of $D_{10}$ is determined as follows: polyethylene particles having a major axis diameter and a minor axis diameter (as for a plane figure of a particle observed under an optical microscope, a distance between parallel lines having the shortest interval is defined as the minor axis diameter of the particle, and a distance between parallel lines having the longest interval in a direction perpendicular thereto is defined as the major axis diameter of the particle) within a range of $D_{10} \pm 10\%$ are identified from a particle group of each polyethylene under an optical microscope, and one particle is arbitrarily collected therefrom. The collected one polyethylene particle is loaded onto a glass slide, and 0.05 mL of liquid paraffin is dropped to the polyethylene particle. Then, a glass cover is placed thereon so as to interpose the polyethylene particle.

Then, the glass slide is loaded onto a heat stage, and the temperature is allowed to increase from room temperature to 150°C under temperature increase conditions given below. The appearance of the polyethylene particle during temperature increase is photographed every 6 seconds under an optical microscope equipped with a camera. An equivalent circle diameter of the polyethylene particle is calculated from each of the obtained observation images. The lowest temperature at which the equivalent circle diameter of the polyethylene particle has become larger by 1% or more based on the equivalent circle diameter of the polyethylene particle at 80°C in a temperature range of 80°C or higher and 150°C or lower is defined as the swelling onset temperature of the polyethylene particle. Measurement is performed at 10 points, and an average value thereof is defined as a swelling onset temperature $T_{10}$ of each polyethylene.

(Temperature increase conditions)

Temperature increase rate from room temperature to 35°C: 5°C/min
Temperature increase rate in a range from 35°C to 80°C: 8°C/min
Temperature increase rate in a range from 80°C to 150°C: 5°C/min

Next, a swelling onset temperature $T_{50}$ of a polyethylene particle having a particle diameter of $D_{50}$, and a swelling onset temperature $T_{90}$ of a polyethylene particle having a particle diameter of $D_{90}$ are also determined in the same manner as in the swelling onset temperature $T_{10}$ using a collected polyethylene particle having a major axis diameter and a minor axis diameter within a range of $D_{50} \pm 10\%$, and a collected polyethylene particle having a major axis diameter and a minor axis diameter within a range of $D_{90} \pm 10\%$.

Finally, the swelling onset temperature T of each polyethylene is determined as follows:

$$T = \frac{T_{10} + T_{50} + T_{90}}{3}$$

Advantageous Effects of Invention

According to the present invention, it is possible to provide a polyolefin film excellent in the balance among a heat shrinkage rate, permeability, a shutdown temperature, and a strength.

Brief Description of Drawings

[Figure 1] Figure 1 shows a graph showing results of measuring melting points of polyolefin films in Example 1 and Comparative Example 7.
[Figure 2] Figure 2 shows a graph showing results of measuring Tm1 of the polyolefin films in Example 1 and Comparative Example 7.
[Figure 3] Figure 3 shows a diagram illustrating the measurement of a shutdown temperature in examples.
[Figure 4] Figure 4 shows a diagram illustrating the measurement of an impact test in examples.
[Figure 5] Figure 5 shows a diagram illustrating an expression of the relationship between Sm and Ts based on a graph in which basis weight-equivalent puncture strengths Sm and shutdown temperatures Ts of polyolefin films of Examples 1 to 20 and Comparative Examples 1 to 6 were plotted.

Description of Embodiments

Hereinbelow, an embodiment for carrying out the present invention (hereinafter referred to as "the present embodiment") will now be described in detail, but the present invention is not limited thereto and can be variously modified without departing the gist of the invention. "(Meth)acryl" herein means "acryl" and the corresponding "methacryl". "To" indicating a numerical range herein means to include numerals before and after the "to" as the lower limit and upper limit, unless otherwise indicated.

[Polyolefin film]

The polyolefin film of the present embodiment is a polyolefin film comprising a polyolefin, wherein the polyolefin comprises polyethylene, a melting point of the polyolefin film is 134°C or higher and 140°C or lower, a basis weight-equivalent puncture strength Sm of the polyolefin film is 70 gf/(g/m$^2$) or more and 150 gf/(g/m$^2$) or less, and a shutdown temperature Ts and the Sm of the polyolefin film satisfy the following relationship:

$$Ts < 0.13 \times Sm + 130.$$

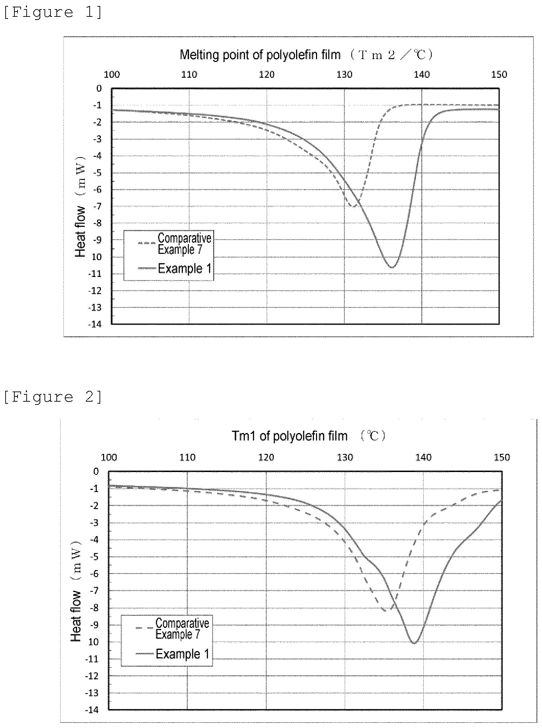

The polyolefin film of the present embodiment, having the configuration as described above, is excellent in the balance among a heat shrinkage rate, permeability, a shutdown temperature, and a strength.
"Melting point" simply described in the present embodiment refers to the second melting temperature Tm2 of a polyolefin (film) measured by differential scanning calorimetry (DSC) (see Figure 1). The first melting temperature Tm1 is referred to as the "melting point Tm1" and discriminated therefrom (see Figure 2).

(Composition of polyolefin)

The polyolefin contains polyethylene. Examples of the polyolefin other than polyethylene include, but are not particularly limited to, homopolymers, copolymers, and multiple-stage polymers provided using a monomer such as ethylene, propylene, 1-butene, 4-methyl-1-pentene, 1-hexene, and 1-octene. These polymers may be used singly or in admixture of two or more. The polyolefin preferably contains polyethylene and/or polypropylene, more preferably contains a mixture of two or more polyethylenes as the polyethylene, from the viewpoint of providing the polyolefin film with melt viscosity, puncture strength, shut-down and melt-down properties appropriate for a separator.
Specific examples of the polyethylene include, but are not particularly limited to, low density polyethylene (LDPE), linear low density polyethylene (LLDPE), medium density polyethylene (MDPE), high density polyethylene (HDPE), high molecular weight polyethylene (HMWPE), and ultrahigh molecular weight polyethylene (UHMWPE).
The form of the polyethylene is not particularly limited, and polyethylene having a shape such as a powder or pellets may be adopted. The polyolefin film of the present embodiment preferably contains polyethylene in a powder shape from the viewpoint of suppressing defects of unmelted matter. The average particle diameter of the polyethylene in a powder shape is not particularly limited and may be, for example, from 50 to 300 μm. "Powder" herein refers to particulate polyethylene that satisfies the range of the average particle diameter described above, unless otherwise specified. The average particle diameter can be measured using a laser particle size distribution analyzer with methanol as a dispersion medium and determined from a particle diameter $D_{50}$ which attains a cumulative percentage of 50% by preparing a cumulative particle size distribution from smaller particle sizes on the basis of the measurement.
In the present embodiment, high molecular weight polyethylene (HMWPE) means polyethylene having a viscosity average molecular weight (Mv) of 100,000 or more. The Mv of ultrahigh molecular weight polyethylene (UHMWPE) is generally 1,000,000 or more. Thus, the high molecular weight polyethylene (HMWPE) in the present embodiment encompasses, by definition, UHMWPE.
In the present embodiment, high density polyethylene refers to polyethylene having a density of 0.942 or more and 0.970 g/cm$^3$ or less. The density of polyethylene in the present embodiment refers to a value measured in accordance with D) Density gradient tube method described in JIS K7112 (1999).
Specific examples of polypropylene include, but are not particularly limited to, isotactic polypropylene, syndiotactic polypropylene, and atactic polypropylene.
Specific examples of copolymers of ethylene and propylene include, but are not particularly limited to, ethylene-propylene random copolymers and ethylene propylene rubber.
The polyolefin film may contain a resin other than the polyolefins listed above. Examples of the resin include, but are not particularly limited to, polyethylene terephthalate, polycycloolefins, polyethersulfone, polyamide, polyimide, polyamideimide, polyaramid, polyvinylidene fluoride, nylon, and polytetrafluoroethylene.
In the present embodiment, the polyolefin film preferably contains polyethylene A and polyethylene B different from the polyethylene A from the viewpoint of more satisfactory balance among a heat shrinkage rate, a shutdown temperature, and a strength. In the present embodiment, the polyethylene A is not particularly limited as long as the polyethylene is homopolyethylene having a melting point of 134.0°C or higher and 138.0°C or lower and a melt index of 0.5 g/10 min or more and 50 g/10 min. Such polyethylenes may be used singly or in combinations of two or more.

The melting point of the polyethylene A is preferably 134.0°C or higher and 138.0°C or lower, more preferably 134.5°C or higher and 137.0°C or lower, from the similar viewpoint as above. The melt index of the polyethylene A is preferably 0.5 g/10 min or more and 50 g/10 min or less, more preferably 1.0 g/10 min or more and 40 g/10 min, from the similar viewpoint as above.

The melting point and the melt index can be measured on the basis of methods described in examples mentioned below.

The melting point can be adjusted to the above range, for example, by appropriately selecting a hydrogen concentration during polymerization, the presence or absence of a copolymer component or the content thereof, or the catalytic species to be used, and thereby adjusting a molecular weight.

The melt index can be adjusted to the above range, for example, by appropriately selecting a hydrogen concentration during polymerization, the presence or absence of a copolymer component or the content thereof, or the catalytic species to be used, and thereby adjusting a molecular weight.

The content of the polyethylene A based on 100 parts by mass in total of the polyethylene A and the polyethylene B is preferably 20 parts by mass or more and 80 parts by mass or less, more preferably 25 parts by mass or more and 75 parts by mass or less, still more preferably 30 parts by mass or more and 70 parts by mass or less, from the viewpoint of more satisfactory balance among a heat shrinkage rate, a shutdown temperature, and a strength.

In the present embodiment, the polyethylene B is not particularly limited as long as the polyethylene is different from the polyethylene A. Such polyethylenes may be used singly or in combinations of two or more. The polyethylene B is preferably homopolyethylene having a viscosity average molecular weight of 800,000 or more and 5,000,000 or less, more preferably homopolyethylene having a viscosity average molecular weight of 850,000 or more and 2,500,000 or less, still more preferably homopolyethylene having a viscosity average molecular weight of 90 or more and 150 or less, from the viewpoint of a strength.

The melting point of the polyethylene B is preferably 134.0°C or higher and 138.0°C or lower, more preferably 134.5°C or higher and 137.0°C or lower, from the similar viewpoint as above.

The viscosity average molecular weight can be measured on the basis of a method described in examples mentioned below.

The viscosity average molecular weight can be adjusted to the above range, for example, by appropriately selecting a hydrogen concentration during polymerization, the presence or absence of a copolymer component or the content thereof, or the catalytic species to be used.

The melting point of the polyethylene B can be measured in the same manner as in the melting point of the polyethylene A and can also be adjusted to the above range by the same method as in the melting point of the polyethylene A.

In the present embodiment, the viscosity average molecular weight of the polyethylene A is preferably a viscosity average molecular weight of 10,000 or more and 200,000 or less, more preferably 30,000 or more and 150,000 or less, still more preferably 50,000 or more and 120,000 or less, from the viewpoint of extrusion stability and a shutdown temperature.

The viscosity average molecular weight of the polyethylene A can be measured in the same manner as in the viscosity average molecular weight of the polyethylene B and can also be adjusted to the above range by the same method as in the melting point of the polyethylene B.

The content of the polyethylene B based on 100 parts by mass in total of the polyethylene A and the polyethylene B is preferably 20 parts by mass or more and 80 parts by mass or less, more preferably 25 parts by mass or more and 75 parts by mass or less, still more preferably 30 parts by mass or more and 70 parts by mass or less, from the viewpoint of a strength.

(Swelling onset temperature)

In the present embodiment, it is preferable to each individually select the polyethylene A and the polyethylene B from the viewpoint of a swelling onset temperature. "Swelling" here refers to a phenomenon in which a plasticizer penetrates into a polyethylene particle when polyethylene (polyethylene particle) and the plasticizer are mixed and heated. A temperature at which the swelling starts in the course of temperature increase is referred to as the "swelling onset temperature".

The principles of swelling are as follows: when polyethylene particles are impregnated with a plasticizer, the plasticizer penetrates (blends) into the polyethylene particles so that the polyethylene swells. Liquid paraffin is considered to penetrate into an amorphous moiety of polyethylene because it cannot easily penetrate into a crystalline moiety of the polyethylene. In actuality, it has been confirmed that the crystalline lone period of polyethylene is extended with swelling. In short, the swelling seems to be a phenomenon in which the plasticizer enters between lamellar crystals of polyethylene and pushes out the amorphous moiety. On the other hand, tie molecules that connect lamellar crystals exist between the lamellar crystals. The tie molecules play a role in anchoring the lamellar crystals to each other and therefore presumably serve as resistance force against swelling. Specifically, the swelling onset temperatures can be controlled by the number of tie molecules and/or the degree of tension. As the number of tie molecules is smaller and/or the tie molecules are looser, the swelling is considered to occur more easily because the plasticizer more easily penetrates into the amorphous moiety. The number of tie molecules largely depends on a molecular weight. In short, polyethylene having a higher molecular weight generally tends to have a higher swelling onset temperature. Another factor that influences the swelling onset temperature includes the presence of a copolymer component. In polyethylene, a moiety derived from the copolymer component is amorphous (amorphous moiety). Therefore, when such an amorphous moiety is scattered in particles, the plasticizer easily penetrates thereinto. As a result, the swelling onset temperature tends to decrease.

Specific examples of a method for controlling the tension of the tie molecules in a drying step include, but are not particularly limited to, a drying temperature. When polyethylene is dried at a high temperature, the tie molecules have tension due to the rearrangement of crystals. As a result, the swelling onset temperature tends to increase. For example, the tension of the tie molecules is suppressed by setting a drying temperature to 70°C or lower and thereby suppressing the rearrangement of crystals. As a result, the swelling onset temperature tends to decrease.

Thus, factors that influence the swelling onset temperature typically include the number of tie molecules (which correlates with a molecular weight), the presence or absence of a copolymer component, and a drying temperature. In short, the swelling onset temperature tends to elevate with an increase in molecular weight, reduction in copolymer component, or an increase in drying temperature.

Specifically, the swelling onset temperature can be measured on the basis of a method described in examples mentioned below.

In the present embodiment, the difference in swelling onset temperature between the polyethylene A and the polyethylene B (hereinafter, also simply referred to as the "swelling onset temperature difference") is preferably smaller from the viewpoint of preventing unmelted gel defects from occurring due to insufficient swelling of polyethylene by a plasticizer. As mentioned above, since the swelling onset temperature largely depends on a molecular weight, the polyethylene A and the polyethylene B tend to have a high swelling onset temperature and a low swelling onset temperature, respectively. The difference can be reduced by using the approach mentioned above as an approach of reducing the difference between these swelling onset temperatures (i.e., swelling onset temperature difference), and thereby allowing the swelling onset temperature to decrease for the polyethylene A and to increase for the polyethylene B. Specifically, the swelling onset temperature difference is preferably 10°C or less, more preferably 9°C or less, still more preferably 8°C or less. When two or more polyethylenes that correspond to the polyethylene A and/or two or more polyethylenes that correspond to the polyethylene B are contained, all "differences in swelling onset temperature between the polyethylene A and the polyethylene B" conceived are calculated and the largest value among the calculated values is adopted as the swelling onset temperature difference.

In the present embodiment, the viscosity average molecular weight of polypropylene is preferably 100,000 or more and 2,000,000 or less, more preferably 200,000 or more and 1,500,000 or less, still more preferably 300,000 or more and 1,000,000 or less, from the viewpoint of ease of film formation and film stability at a high temperature.

The viscosity average molecular weight can be measured on the basis of a method described in examples mentioned below.

The viscosity average molecular weight can be adjusted to the above range, for example, by adjusting polymerization conditions.

In the present embodiment, the melting point of polypropylene is preferably 130°C or higher and 200°C or lower, more preferably 140°C or higher and 180°C or lower, still more preferably 150°C or higher and 170°C or lower, from the viewpoint of film stability at a high temperature.

The melting point can be measured on the basis of a method described in examples mentioned below.

The melting point can be adjusted to the above range, for example, by adjusting polymerization conditions.

A polyethylene content based on the total mass of the resin components constituting the polyolefin film is preferably 50 parts by mass or more and 100 parts by mass or less, more preferably 80 parts by mass or more and 100 parts by mass or less, from the viewpoint of shutdown characteristics and meltdown characteristics.

A polypropylene content based on the total mass of the resin components constituting the polyolefin film is preferably 0 parts by mass or more and less than 50 parts by mass, more preferably 0 parts by mass or more and 10 parts by mass or less, from the viewpoint of a melt viscosity and shutdown characteristics.

(Melting point of polyolefin film)

In the present embodiment, the melting point of the polyolefin film is 134°C or higher and 140°C or lower from the viewpoint that a heat shrinkage rate can be reduced because heat setting can be carried out at a high temperature. The lower limit value of the melting point may be 133.5°C, and the upper limit value of the melting point may be 140.0°C. The melting point of the polyolefin film is preferably 134.0°C or higher and 140.0°C or lower, more preferably 134.0°C or higher and 139.0°C or lower, still more preferably 134.5°C or higher and 139.0°C or lower, further preferably 134.5°C or higher and 138.0°C or lower, still further preferably 135.0°C or higher and 138.0°C or lower.
The melting point can be measured on the basis of a method described in examples mentioned below.
The melting point can be adjusted to the above range, for example, by adjusting the melting points of polyethylenes to be used, the mixing ratio thereof, and kneading conditions in an extruder.

(Melting point Tm1 of polyolefin film)

In the present embodiment, the melting point Tm1 of the polyolefin film is 135°C or higher and 145°C or lower, more preferably 136°C or higher and 143°C or lower, still more preferably 137°C or higher and 141°C or lower, from the viewpoint that a higher strength derived from stretching and orientation of the polyolefin can be achieved.
The melting point Tm1 can be measured on the basis of a method described in examples mentioned below.
The melting point Tm1 can be adjusted to the above range, for example, by adjusting the weight average molecular weight of a polyolefin resin composition containing a polyolefin (hereinafter, also simply referred to as the "polyolefin resin composition"; the polyolefin resin composition is different from a plasticizer mentioned below), the mixing ratio of each polyolefin in the polyolefin resin composition, the mix proportion of the polyolefin resin composition and a plasticizer, a stretching temperature, or a stretching ratio.

(Total amount of side chain having 3 carbon atoms and side chain having 4 carbon atoms)

In the present embodiment, the total amount of a side chain having 3 carbon atoms and a side chain having 4 carbon atoms measured for the polyolefin film is preferably 0 mol% or more and 0.1 mol% or less, still more preferably 0 mol% or more and 0.05 mol% or less, as a proportion to the total number of carbon atoms from the viewpoint that a heat shrinkage rate can be more reduced because heat setting can be carried out at a high temperature and from the viewpoint that a much higher strength derived from easy formation of an extended chain during stretching orientation can be achieved. The total amount of the side chain having 3 carbon atoms and the side chain having 4 carbon atoms can be measured on the basis of a method described in examples mentioned below. The total amount of the side chain having 3 carbon atoms and the side chain having 4 carbon atoms can be adjusted by a monomer component of the polyethylene used, or the like. The total amount of the side chain having 3 carbon atoms and the side chain having 4 carbon atoms tends to decrease with a decrease in the amount of a polyethylene copolymer containing, for example, 1-pentene or 1-hexene as a copolymer component to be used. The total amount of the side chain having 3 carbon atoms and the side chain having 4 carbon atoms also tends to decrease, for example, by appropriately adjusting polymerization conditions so as to reduce side reaction during polymerization of monomers.

(Film thickness of polyolefin film)

In the present embodiment, the film thickness of the polyolefin film is preferably 1 $\mu$m or more and 18 $\mu$m or less, more preferably 1 $\mu$m or more and 14 $\mu$m or less, still more preferably 1 $\mu$m or more and 12 $\mu$m or less, from the viewpoint of an increase in capacity of an electricity storage device.
The film thickness can be measured on the basis of a method described in examples mentioned below.
The film thickness can be adjusted to the above range, for example, by controlling the die lip interval, the stretching ratio in a stretching step, or the like.

(Basis weight-equivalent puncture strength Sm of polyolefin film)

In the present embodiment, the basis weight-equivalent puncture strength Sm (puncture strength expressed in terms of a basis weight $(g/m^2)$) of the polyolefin film is 70 $gf/(g/m^2)$ or more and 150 $gf/(g/m^2)$ or less from the viewpoint of a strength of the polyolefin film. When the basis weight-equivalent puncture strength Sm falls within the above range, the strength is improved. From the similar viewpoint, the basis weight-equivalent puncture strength Sm is preferably 80 $gf/(g/m^2)$ or more and 150 $gf/(g/m^2)$ or less.
The basis weight-equivalent puncture strength Sm can be measured by a method described in examples mentioned below. The basis weight-equivalent puncture strength can be adjusted to the above range, for example, by appropriately adjusting the values of a basis weight and a puncture strength by methods mentioned below. More specifically, the basis weight-equivalent puncture strength can be adjusted to the above range, for example, by adjusting the weight average molecular weight of the polyolefin resin composition, the mixing ratio of each polyolefin in the polyolefin resin composition, the mix proportion of the polyolefin resin composition and a plasticizer, a stretching temperature, or a stretching ratio.

(Basis weight of polyolefin film)

The basis weight of the polyolefin film is preferably 1.0 g/m$^2$ or more, more preferably 2.0 g/m$^2$ or more, from the viewpoint of a strength. The basis weight is preferably 10 g/m$^2$ or less, more preferably 8.0 g/m$^2$ or less, from the viewpoint of the capacity of an electricity storage device.
The basis weight can be measured by a method described in examples mentioned below and can be adjusted, for example, by controlling the die lip interval, the stretching ratio in a stretching step, or the like.

(Puncture strength of polyolefin film)

The puncture strength not expressed in terms of the basis weight of the polyolefin film (hereinafter, simply referred to as the "puncture strength") is preferably 100 gf or more and 800 gf or less, more preferably 150 gf or more and 700 gf or less, from the viewpoint of a strength and stability during film formation.
The puncture strength can be measured by a method described in examples mentioned below and can be adjusted to the above range, for example, by adjusting the weight average molecular weight of the polyolefin resin composition, the mixing ratio of each polyolefin in the polyolefin resin composition, the mix proportion of the polyolefin resin composition and a plasticizer, a stretching temperature, or a stretching ratio.

(Shutdown temperature Ts of polyolefin film)

The shutdown temperature Ts of the polyolefin film is preferably 145°C or lower, more preferably 143°C or lower, still more preferably 142°C or lower, from the viewpoint of securing safety in a high temperature state.
The shutdown temperature Ts can be measured by a method described in examples mentioned below and can be adjusted to the above range, for example, by adjusting the weight average molecular weight of the polyolefin resin composition, the mixing ratio of each polyolefin in the polyolefin resin composition, the mix proportion of the polyolefin resin composition and a plasticizer, a stretching temperature, or a stretching ratio.

(Relationship between shutdown temperature Ts and basis weight-equivalent puncture strength Sm)

In general, the shutdown temperature Ts and the basis weight-equivalent puncture strength Sm are in a proportional relationship. As the basis weight-equivalent puncture strength becomes higher, the number of extended chain crystals (hexagonal crystals) oriented in the direction of stretching increases in polyolefin crystals. The extended chain crystals have a higher melting point than that of lamellar crystals and therefore have a higher temperature necessary for filling pores by the melting of fibrillar crystals. Hence, the shutdown temperature also elevates. In the present embodiment, the shutdown temperature Ts and the basis weight-equivalent puncture strength Sm preferably satisfy the following relationship from the viewpoint of the balance between a strength and safety in a high temperature state.

$$Ts < 0.13 \times Sm + 130$$

It can be confirmed on the basis of a method described in examples mentioned below that the relationship described above is satisfied. Specifically, this can be confirmed from a negative value of "Ts - 0.13 × Sm - 130", and the value is preferably-10 or more and less than 0, more preferably -5 or more and less than 0, from the similar viewpoint as above.
The relationship described above tends to be satisfied, for example, by adjusting the weight average molecular weight of the polyolefin resin composition, the mixing ratio of each polyolefin in the polyolefin resin composition, the mix proportion of the polyolefin resin composition and a plasticizer, a stretching temperature, or a stretching ratio as well as by adopting a manufacturing method mentioned below.

(Heat shrinkage rate at 120°C of polyolefin film)

For the polyolefin film, it is preferable to enhance safety that is evaluated by a collision test or a rapid temperature increase test described in examples mentioned below, from the viewpoint of expanding the scope of use of an electrochemical device. In particular, the heat shrinkage rate of the polyolefin film is considered to contribute to safety that is evaluated by a rapid temperature increase test. Specifically, in the present embodiment, the heat shrinkage rate at 120°C of the polyolefin film is preferably 10% or less from the viewpoint of securing a higher level of safety. More specifically, the heat shrinkage rate in MD (the machine direction when the polyolefin film is continuously molded) and/or TD (the direction traversing the MD of the polyolefin film at an angle of 90°) is more preferably 10% or less. From the similar viewpoint, the heat shrinkage rate in MD and/or TD is more preferably 8.0% or less, still more preferably 7.0% or less.

The heat shrinkage rates in MD and TD can be measured on the basis of a method described in examples mentioned below.

The heat shrinkage rates in MD and TD can be adjusted to the above range, for example, by adjusting the weight average molecular weight of the polyolefin resin composition, the mixing ratio of each polyolefin in the polyolefin resin composition, the mix proportion of the polyolefin resin composition and a plasticizer, a stretching temperature, a stretching ratio, a TD stretching ratio during heat setting, a TD stretching temperature, a relaxation ratio, or a relaxation temperature.

(Porosity P of polyolefin film)

The porosity P of the polyolefin film is preferably 25% or more, more preferably 28% or more, from the viewpoint of permeability and is preferably 65% or less, more preferably 60% or less, from the viewpoint of a film strength.

The porosity P can be measured by a method described in examples mentioned below.

The porosity P can be adjusted to the above range, for example, by controlling the mix proportion of the polyolefin resin composition and a plasticizer, a stretching temperature, a stretching ratio, a heat setting temperature, a stretching ratio during heat setting, or a relaxation ratio during heat setting, or combining these.

(Air permeability of polyolefin film)

The air permeability of the polyolefin film is preferably 1 s/100 cm$^3$ or more, more preferably 30 s/100 cm$^3$ or more, still more preferably 50 s/100 cm$^3$ or more, from the viewpoint of preventing an excess electric current from flowing among a plurality of electrodes via the polyolefin film and is preferably 1000 s/100 cm$^3$ or less, more preferably 300 s/100 cm$^3$ or less, still more preferably 200 s/100 cm$^3$ or less, from the viewpoint of permeability.

The air permeability can be measured by a method described in examples mentioned below.

The air permeability can be adjusted to the above range, for example, by controlling the mix proportion of the polyolefin resin composition and a plasticizer, a stretching temperature, a stretching ratio, a heat setting temperature, a stretching ratio during heat setting, or a relaxation ratio during heat setting, or combining these.

(Film thickness-equivalent air permeability Gt of polyolefin film)

In the present embodiment, the film thickness-equivalent air permeability Gt (air permeability expressed in terms of a film thickness ($\mu$m)) of the polyolefin film can be any value calculated from the preferable ranges of the film thickness and the air permeability mentioned above and is preferably 3 s/100 cm$^3$ or more and 30 s/100 cm$^3$ or less, more preferably 3 s/100 cm$^3$ or more and 25 s/100 cm$^3$ or less, from the viewpoint of preventing an excess electric current from flowing among a plurality of electrodes via the polyolefin film and from the viewpoint of permeability.

The film thickness-equivalent air permeability Gt can be measured by a method described in examples mentioned below. The film thickness-equivalent air permeability Gt can be adjusted to the above range, for example, by appropriately adjusting the values of the film thickness and the air permeability by the methods mentioned above, or the like. In general, the film thickness-equivalent air permeability tends to become larger with a decrease in film thickness. This is because, since pores easily collapse near the surface of the film, the influence becomes larger with a decrease in film thickness.

(Relationship between porosity P and film thickness-equivalent air permeability Gt)

In the present embodiment, the film thickness-equivalent air permeability Gt and the porosity P of the polyolefin film preferably satisfy the following relationship from the viewpoint of more satisfactory balance among a heat shrinkage rate, permeability, a shutdown temperature, and a strength.

$$\mathrm{LN(Gt)} \leq -0.070 \times P + 5.8$$

It can be confirmed on the basis of a method described in examples mentioned below that the relationship described above is satisfied. Specifically, this can be confirmed from a value of "LN(Gt) + 0.070 × P - 5.8" of 0 or less, and the value is preferably-2.0 or more and 0 or less, more preferably -2.0 or more and -0.2 or less, from the similar viewpoint as above.

In general, the porosity P and the film thickness-equivalent air permeability Gt are in a tradeoff relationship. The air permeability becomes larger with a decrease in porosity, i.e., a decrease in the proportion of a pore moiety, because the number of paths through which air passes decreases. As mentioned above about the film thickness-equivalent air permeability, the value of the film thickness-equivalent air permeability tends to become larger with a decrease in film thickness.

The relationship described above tends to be satisfied, for example, by controlling the mix proportion of the polyolefin resin composition and a plasticizer, a stretching temperature, a stretching ratio, a heat setting temperature, a stretching ratio during heat setting, or a relaxation ratio during heat setting, or combining these as well as by adopting a manufacturing method mentioned below.

(Form of polyolefin film)

Examples of the form of the polyolefin film include, but are not particularly limited to, polyolefin microporous bodies. Examples of polyolefin microporous bodies include, also but are not particularly limited to, polyolefin films, polyolefin-based fiber fabrics (woven fabrics), and polyolefin-based fiber non-woven fabrics.

[Method for manufacturing polyolefin film]

A method for manufacturing the polyolefin film of the present embodiment is not particularly limited as long as the polyolefin film of the present embodiment can be obtained. The following manufacturing method is preferable from the viewpoint of preventing unmelted gel defects from occurring due to insufficient swelling of polyethylene by a plasticizer. Specifically, the preferable manufacturing method according to the present embodiment is a method for manufacturing a polyolefin film comprising a polyolefin, comprising: a step A of feeding a polyolefin resin composition containing the polyolefin to a polyolefin feed port in an extruder; a step B of feeding a portion of a plasticizer to a first plasticizer feed port in the extruder; and a step C of feeding at least a portion of the remaining plasticizer to a second plasticizer feed port in the extruder, wherein the first plasticizer feed port is disposed on the downstream side of the polyolefin feed port, the second plasticizer feed port is disposed on the downstream side of the first plasticizer feed port, and the amount of the plasticizer to be fed in the step B is 50 parts by mass or more and 90 parts by mass or less based on the total amount of the plasticizer. The method for manufacturing the polyolefin film of the present embodiment, thus configured, can manufacture a polyolefin film excellent in the balance among a heat shrinkage rate, permeability, a shutdown temperature, and a strength while preventing the occurrence of unmelted gel defects.

Hereinbelow, the preferable manufacturing method according to the present embodiment will be described in detail.

The polyolefin resin composition that can be used in the method for manufacturing the polyolefin film of the present embodiment is not particularly limited as long as the polyolefin resin composition contains the polyolefin. The polyolefin mentioned above can be appropriately adopted as the polyolefin. It is preferable to contain polyethylene A, polyethylene B, polypropylene, or the like as the polyolefin mentioned above.

Aside from the polyolefin resin composition, a plasticizer can be used. Examples of the plasticizer include, but are not particularly limited to, nonvolatile solvents that may form a uniform solution at the melting point of the polyolefin or higher, including hydrocarbons such as liquid paraffin and paraffin wax; esters such as dioctyl phthalate and dibutyl phthalate; and higher alcohols such as oleyl alcohol and stearyl alcohol. Among the plasticizers, liquid paraffin is preferable because liquid paraffin has high compatibility with polyethylene, polypropylene, or the like, peeling-off at the interface between the resin and the plasticizer is unlikely to occur even when the melt-kneaded product is stretched, and uniform stretching tends to be easily achieved.

The amount of the plasticizer to be added according to the present embodiment is preferably from 56 parts by mass to 80 parts by mass, more preferably from 60 parts by mass to 76 parts by mass, still more preferably from 62 parts by mass to 74 parts by mass, based on 100 parts by mass of the polyolefin resin composition. When the amount of the plasticizer to be added is adjusted to 60 parts by mass or more, the balance between a porosity and air permeability can be adjusted. The melt viscosity of the resin composition is reduced, and melt fracture is suppressed. Film formability during extrusion thereby tends to be improved. On the other hand, when the amount of the plasticizer to be added is adjusted to 80 parts by mass or less, the exertion of a strength and the number of unmelted gel defects can be appropriately controlled. The amount of the plasticizer to be added is appropriately selected depending on the molecular weight of the resin composition or intended physical properties.

Examples of a method of melt-kneading include a method in which a polyolefin and other additives as required are placed in a resin kneading machine such as an extruder, a feeder, a Laboplasto mill, a kneading roll, or a Banbury mixer, and the plasticizer in any proportion is introduced therein and kneaded while the resin component is heat-melt. Examples of additives include, but are not limited to, antioxidants. Examples of antioxidants include, but are not limited to, pentaerythrityl-tetrakis-[3-(3,5-di-t-butyl-4-hydroxyphenyl)propionate].

Next, the melt-kneaded product is molded into a sheet form. Examples of a method for manufacturing a sheet-like molded body include, but are not particularly limited to, a method in which a melt-kneaded product is extruded via a T-die or the like into a sheet form, and the sheet is brought into contact with a thermal conductor for cooling to a temperature sufficiently lower than the crystallization temperature of the resin component to thereby solidify the sheet. Examples of the thermal conductor for use in solidification by cooling include, but are not particularly limited to, metals, water, air, or plasticizers. Among these, metal rolls are preferably employed because of their high thermal conducting efficiency. Interposing the extruded kneaded product between rolls when the product is brought into contact with the metal rolls is preferable because the thermal conducting efficiency is further improved as well as the sheet is oriented to enhance the film strength and the surface smoothness of the sheet tends to be improved. The die lip interval on extruding the melt-kneaded product via a T-die into a sheet form is preferably 200 μm or more and 3,000 μm or less, more preferably 500 μm or more and 2,500 μm or less. When the die lip interval is 200 μm or more, resin residue and the like are reduced, influences on the quality of the film such as streaking and defects are fewer, and risks such a film break tend to be reduced in the subsequent stretching step. Meanwhile, when the die lip interval is 3,000 μm or less, the cooling rate is fast, uneven cooling can be prevented, and additionally there is a tendency that the thickness stability of the sheet can be maintained.

In sheet molding, the kneaded product obtained through the kneading is extruded using an extruder such as a T-die or a circular die. This extrusion may be usual extrusion or may be coextrusion. In the case of coextrusion, the polyolefin film may be obtained by extruding two or more polyolefin resin compositions. Conditions for the extrusion are not particularly limited, and a known method, for example, can be adopted. It is preferable to control a (die) lip clearance or the like from the viewpoint of the film thickness of the resulting polyolefin film.

The preferable manufacturing method according to the present embodiment comprises: a step A of adding the polyolefin resin composition to a powder feed port in an extruder; a step B of adding a plasticizer to a first plasticizer feed port in the extruder; and a step C of adding at least a portion of the remaining resin composition to a second plasticizer feed port in the extruder, wherein the second plasticizer feed port is disposed downstream of the first plasticizer feed port. Specifically, a plasticizer is fed in two or more divided portions from two or more feed ports disposed at different positions of an extruder. In this respect, the amount of the plasticizer to be added in the step B based on the total amount of the plasticizer to be used is set to 50 parts by mass or more and 90 parts by mass or less. In this way, there is a tendency that unmelted gel defects can be more effectively prevented from occurring due to insufficient swelling of polyethylene by the plasticizer.

From the similar viewpoint, the amount of the plasticizer to be added in the step B is more preferably 55 parts by mass or more and 85 parts by mass or less, still more preferably 60 parts by mass or more and 80 parts by mass or less.

The sheet-like molded body also may be rolled. Rolling can be conducted by a press method using a double belt press, for example. Orientation of the surface layer portion particularly tends to increase by conducting rolling. The rolling area ratio is preferably more than 1 time and 3 times or less, more preferably more than 1 time and 2 times or less. When the rolling ratio exceeds 1 time, the plane orientation increases, and the film strength of the polyolefin film to be finally achieved tends to increase. Meanwhile, when the rolling ratio is 3 times or less, the differential orientation between the surface layer portion and the center inner portion is small, and there is a tendency that a porous structure uniform in the direction of the thickness of the film can be formed.

The plasticizer is then removed from the sheet-like molded body. An example of a method of removing the plasticizer includes a method in which the sheet-like molded body is immersed in an extraction solvent to extract the plasticizer followed by sufficient drying. The method of extracting the plasticizer may be conducted either in a batch or continuous manner. In order to suppress shrinkage of the polyolefin film, the ends of the sheet-like molded body are preferably restrained during a series of the immersion and drying steps. The amount of the plasticizer remaining in the polyolefin film is preferably set to less than 1 part by mass based on the total mass of the polyolefin film.

As the extraction solvent employed for extracting the plasticizer, preferably employed is an extraction solvent that is a poor solvent to the polyolefin and a good solvent to the plasticizer and has a boiling point lower than the melting point of the polyolefin. Examples of such extraction solvents include, but are not particularly limited to, hydrocarbons such as n-hexane and cyclohexane; halogenated hydrocarbons such as methylene chloride and 1,1,1-trichloroethane; non-chlorine halogenated solvents such as hydrofluoroether and hydrofluorocarbon; alcohols such as ethanol and isopropanol; ethers such as diethyl ether and tetrahydrofuran; and ketones such as acetone and methyl ethyl ketone. These extraction solvents may be recovered by an operation such as distillation and reused. When an inorganic material is employed as the plasticizer, an aqueous solution of sodium hydroxide, potassium hydroxide, or the like may be employed as the extraction solvent.

The sheet-like molded body thus obtained is preferably stretched. Stretching may be conducted before the plasticizer is extracted from the sheet-like molded body. Alternatively, stretching may be conducted after the plasticizer is extracted from the sheet-like molded body. Further, stretching may be conducted before and after the plasticizer is extracted from the sheet-like molded body.

As a stretching treatment, either uniaxial stretching or biaxial stretching can be suitably employed. From the viewpoint of improving the strength or the like of the polyolefin film to be provided, biaxial stretching is preferable. When the sheet-like molded body is biaxially stretched at a high ratio, the molecules are oriented in the plane direction, the polyolefin film to be finally provided becomes difficult to tear and tends to have a high puncture strength.

Examples of a stretching method include methods of simultaneous biaxial stretching, sequential biaxial stretching, multiple-stage stretching, and multiple-time stretching. From the viewpoint of an improvement in the puncture strength, uniform stretching, and shutdown properties, simultaneous biaxial stretching is preferable. From the viewpoint of ease of control of the plane orientation, sequential biaxial stretching is preferable.

The simultaneous biaxial stretching here refers to a stretching method in which MD (the machine direction when the polyolefin film is continuously molded) stretching and TD (the direction traversing the MD of the polyolefin film at an angle of 90°) stretching are simultaneously conducted, and the stretching ratios in the directions may be different. The sequential biaxial stretching refers to a stretching method in which MD stretching and TD stretching are independently conducted, and when stretching is conducted in the MD or TD, the polyolefin film is in a non-restrained state or in a state of being fixed at a constant length in the other direction.

The stretching ratio, in terms of an area magnification, is preferably in the range of 20 times or more and 100 times or less, more preferably in the range of 25 times or more and 70 times or less, from the viewpoint of a strength and productivity. The stretching ratio in each axial direction is preferably 5 times or more and 9 times or less, more preferably 6 times or more and 8 times or less, in the MD from the similar viewpoint as above. The stretching ratio is preferably 5 times or more and 9 times or less, more preferably 6 times or more and 8 times or less, in the TD from the similar viewpoint as above.

The temperature during stretching in each axial direction is preferably 112°C or higher and 135°C or lower, more preferably 115°C or higher and 130°C or lower, in the MD from the similar viewpoint as above. The temperature is preferably 112°C or higher and 135°C or lower, more preferably 115°C or higher and 130°C or lower, in the TD from the similar viewpoint as above.

The polyolefin film is preferably subjected to a heat treatment for the purpose of heat setting from the viewpoint of suppressing shrinkage. Examples of the method of the heat treatment include a stretching operation conducted in a predetermined temperature atmosphere and at a predetermined stretching ratio in order to adjust the physical properties, and/or a relaxation operation conducted in a predetermined temperature atmosphere and at a predetermined relaxation ratio in order to reduce the stretching stress. The relaxation operation may be conducted after the stretching operation is conducted. These heat treatments can be conducted using a tenter or a roll stretching machine.

In the stretching operation in heat setting, stretching of 1.6 times or more and 2.3 times or less, more preferably 1.7 times or more and 2.2 times or less, is preferable in the MD and/or TD of the film from the viewpoint of a high strength and a high porosity. The temperature during the stretching operation in the MD and/or TD is preferably 115°C or higher and 140°C or lower from the similar viewpoint as above.

The relaxation operation is a reduction operation in the MD and/or TD of the film. The relaxation ration is a value obtained by dividing the size of the film after the relaxation operation by the size of the film before the relaxation operation. When relaxation is conducted both in the MD and TD, the relaxation ratio is a value obtained by multiplying the MD relaxation ratio and the TD relaxation ratio. The relaxation ratio is preferably 0.95 or less. The relaxation ratio is preferably 0.7 or more from the viewpoint of film quality. The temperature during the relaxation operation is preferably 128°C or higher and 140°C or lower, more preferably 130°C or higher and 140°C or lower, from the similar viewpoint as above.

The relaxation operation may be conducted in both directions, or the MD and TD, or may be conducted in only one direction, the MD or TD.

These stretching and relaxation operations after plasticizer extraction are preferably conducted in the TD from the viewpoint of process control. The temperature in the stretching and relaxation operations is preferably lower than the melting point Tm of the polyolefin, more preferably in the range of 1°C to 25°C lower than Tm. The temperature in the stretching and relaxation operations in the above range is preferred from the viewpoint of the balance between heat shrinkage rate reduction and porosity.

[Other steps]

The method for manufacturing the polyolefin film of the present embodiment can comprise other steps, in addition to the steps described above. Other steps are not particularly limited, and coextrusion, for example, may be carried out as a step for obtaining the polyolefin film, in addition to the step of the heat setting described above. The method may comprise, after the coextrusion, a peeling-off step of carrying out peeling-off as required to obtain two or more polyolefin films. The method for manufacturing the polyolefin film of the present embodiment may also comprise a surface treatment step of subjecting the surface of the polyolefin film to surface treatment such as electron beam irradiation, plasma irradiation, application of a surfactant, or chemical modification. Further, one surface or both the surfaces of the polyolefin film may be coated with an inorganic component of inorganic particles to obtain a polyolefin film having an inorganic coated layer.

<Formation of inorganic coated layer>

The polyolefin film surface can be provided with an inorganic coated layer from the viewpoint of safety, dimensional stability, heat resistance, and the like. The inorganic coated layer is a layer containing an inorganic component such as inorganic particles and may contain, if desired, a binder resin which binds inorganic particles to each other, a dispersant which disperses inorganic particles in a solvent, and the like.

Examples of materials of inorganic particles to be contained in the inorganic coated layer include oxide-based ceramics such as alumina, silica, titania, zirconia, magnesia, ceria, yttria, zinc oxide, and iron oxide; nitride-based ceramics such as silicon nitride, titanium nitride, and boron nitride; ceramics such as silicon carbide, calcium carbonate, magnesium sulfate, aluminum sulfate, barium sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and silica sand; and glass fiber. These inorganic particle may be used singly or in combinations of two or more.

Examples of the binder resin include conjugated diene-based polymers, acrylic polymers, polyvinyl alcohol-based resins, and fluorine-containing resins. The binder resin can be in the form of latex and can contain water or an aqueous solvent.

The dispersant adsorbs onto inorganic particle surfaces in a slurry and stabilizes the inorganic particles through electrostatic repulsion or the like and is, for example, polycarboxylate, sulfonate, polyoxyether, or a surfactant.

In the particle diameter distribution of the inorganic particles, the particle diameter D50 is in the range of preferably 0.05 $\mu$m to 1.2 $\mu$m, more preferably 0.05 $\mu$m to 0.8 $\mu$m, still more preferably 0.05 $\mu$m to 0.5 $\mu$m. When the D50 is 0.05 $\mu$m or more, the migration of the inorganic particles into the pores of the polyolefin film from the inorganic coated layer is suppressed and the resulting polyolefin film having the inorganic coated layer may have satisfactory permeability. When the D50 is 1.2 $\mu$m or less, the heat resistance of the inorganic coated layer is easily obtained.

The inorganic coated layer can be formed, for example, by applying a slurry of the contained components described above to the polyolefin film surface, followed by drying.

<Formation of adhesive layer>

The polyolefin film surface can be provided with an adhesive layer containing a thermoplastic resin in order to prevent a laminate-type battery, which has also been increasingly adopted to batteries to be mounted on vehicles in recent years for elevation of energy densities, from being deformed or from swelling due to gas generation. Examples of the thermoplastic resin to be contained in the adhesive layer include, but are not particularly limited to, polyolefins such as polyethylene and polypropylene; fluorine-containing resins such as polyvinylidene fluoride and polytetrafluoroethylene; nitrogen-containing rubbers such as vinylidene fluoride-hexafluoropropylene copolymers, vinylidene fluoride-tetrafluoroethylene copolymers, vinylidene fluoride-hexafluoropropylene tetrafluoroethylene copolymers, and ethylene-tetrafluoroethylene copolymers; rubbers such as styrene-butadiene copolymers and hydrogenation products thereof, acrylonitrile-butadiene copolymers and hydrogenation products thereof, acrylonitrile-butadienestyrene copolymers and hydrogenation products thereof, (meth)acrylic acid ester copolymers, styrene-acrylic acid ester copolymers, acrylonitrile-acrylic acid ester copolymers, ethylene propylene rubbers, polyvinyl alcohol, and polyvinyl acetate; cellulose derivatives such as ethylcellulose, methylcellulose, hydroxyethylcellulose, and carboxymethylcellulose; and resins having a melting point and/or a glass transition temperature of 180°C or higher, such as polyphenylene ether, polysulfone, polyethersulfone, polyphenylene sulfide, polyetherimide, polyamideimide, polyamide, and polyester.

After the heat setting step (f), the coextrusion step, or the surface treatment step, a master roll obtained by winding the polyolefin film may be subjected to aging treatment under predetermined temperature conditions, and rewinding operation of the master roll can then be performed. This tends to facilitate obtaining a polyolefin film having higher thermal stability than that of the polyolefin film before rewinding. In the case described above, the temperature during the aging treatment of the master roll is not particularly limited and is preferably 35°C or higher, more preferably 45°C or higher, still more preferably 60°C or higher. The temperature during the aging treatment of the master roll is preferably 120°C or lower from the viewpoint of retaining the permeability of the polyolefin film. The time required for the aging treatment is not particularly limited and is preferably 24 hours or longer because the effect described above is easily exerted.

[Electricity storage device]

The electricity storage device of the present embodiment includes the separator for an electricity storage device of the present embodiment. Typical examples of the configuration of the electricity storage device of the present embodiment include, but are not limited to, ones comprising a positive electrode, a separator for an electricity storage device, a negative electrode, and as desired, an electrolyte solution.

Specific examples of the electricity storage device include a lithium battery, a lithium secondary battery, a lithium ion secondary battery, a sodium secondary battery, a sodium ion secondary battery, a magnesium secondary battery, a magnesium ion secondary battery, a calcium secondary battery, a calcium ion secondary battery, an aluminum secondary battery, an aluminum ion secondary battery, a nickel hydrogen battery, a nickel cadmium battery, an electrical double layer capacitor, a lithium ion capacitor, a redox flow battery, a lithium sulfur battery, a lithium-air battery, and a zinc air battery. Among these, from the viewpoint of practicality, a lithium battery, a lithium secondary battery, a lithium ion secondary battery, a nickel hydrogen battery, or a lithium ion capacitor is preferable, and a lithium ion secondary battery is more preferable.

As the positive electrode, negative electrode, electrolyte solution, and other electricity storage device members, various known ones can be appropriately used in accordance with the type of the electricity storage device.

Examples

Hereinafter, the present embodiment will be described more concretely using examples and comparative examples. The present embodiment is not limited to the following examples in any way.

Various physical properties were measured and evaluated by the following measurement methods and evaluation methods.

[Viscosity average molecular weight Mv]

The intrinsic viscosity [η] (dl/g) in a decalin solvent at 135°C was determined on the basis of ASTM-D4020.

The Mv of polyethylene was calculated by the following equation.

$$[\eta] = 6.77 \times 10^{-4} Mv^{0.67}$$

The Mv of polypropylene was calculated by the following equation.

$$[\eta] = 1.10 \times 10^{-4} Mv^{0.80}$$

[Melting point Tm (°C)]

The melting point of a polyolefin starting material (PE1 to PE14 and PP1 mentioned below) was determined using a differential scanning calorimeter "DSC-60" (manufactured by Shimadzu Corp.). Specifically, the temperature was allowed to increase from room temperature to 200°C at a rate of 10°C/min (first temperature increase course), then decrease to 30°C at 10°C/min (first temperature decrease course), and subsequently increase again to 200°C at a rate of 10°C/min. The temperature at the minimum of the endothermic peak in the second temperature increase course (Tm2) was defined as the melting point of the polyolefin starting material. A value obtained by rounding the obtained value to the first decimal place was defined as the melting point of the polyolefin starting material. Although the temperature at the minimum of the endothermic peak in the first temperature increase course here is called Tm1, the Tm1 is easily influenced by drying conditions and the like during polymerization. In the present examples, the melting point was determined by Tm2 which reset the history of drying conditions and the like.

The melting point of a polyolefin film (polyolefin film of each example mentioned below) was determined using the DSC-60. Specifically, a folded polyolefin film sample was punched into 4.5 mmφ, placed in a 5 to 7 mg sample container, and crimped. The temperature of the sample container was allowed to increase from room temperature to 200°C at a rate of 10°C/min (first temperature increase course), then decrease to 30°C at 10°C/min (first temperature decrease course), and subsequently increase again to 200°C at a rate of 10°C/min. The temperature at the minimum of the endothermic peak in the second temperature increase course (Tm2) was defined as the melting point of the polyolefin film. Specifically, a value obtained by rounding the obtained value to the first decimal place was defined as the melting point of the polyolefin film. Figure 1 shows results of measuring the Tm1 of polyolefin films according to Example 1 and Comparative Example 7. The temperature Tm1 at the minimum of the endothermic peak in the first temperature increase course was also measured for the polyolefin film here. Figure 2 shows results of measuring the Tm1 of the polyolefin films according to Example 1 and Comparative Example 7. Since the Tm1 of the polyolefin film is easily influenced by stretching conditions during film formation, the average molecular weight of the obtained film, and the like, the Tm2, which makes a large contribution to the effects according to the present embodiment, was focused on.

[$^{13}$C-NMR]

o-Dichlorobenzene-d4 was added to a sample collected from the polyolefin film, which was then dissolved at 130°C. After the temperature was temporarily brought back to room temperature, $^{13}$C-NMR measurement was performed at 130°C. Measurement conditions were as follows.

Apparatus: Bruker Avance NEO 600
Measurement probe: 5 mm cryoprobe
Pulse program: zgpg30
Pulse waiting time: 5 sec
Window function: exponential
The number of scans: 8000 times
Measurement temperature: 130°C
Chemical shift reference: 29.9 ppm (-CH2-)
Sample concentration: 10 wt%

The total amount of a side chain having 3 carbon atoms and a side chain having 4 carbon atoms was calculated as a proportion to the total number of carbon atoms from the ratio of a peak integral value around 20 ppm for propylene and the ratio of a peak integral value around 11 ppm for 1-butene to the peak integral value of 30 ppm carbon atoms.

[Melt index MI]

MI was measured in accordance with JIS K7210: 1999 (Plastics - the melt mass-flow rate (MFR) and the melt volume-flow rate (MVR) of thermoplastic). Specifically, in the case of polyethylene, the amount (g) of a resin that flowed out in 10 minutes under a load of 2.16 kgf at 190°C was measured and rounded to the first decimal place, and the obtained value was defined as the MI. In the case of polypropylene, the amount (g) of a resin that flowed out in 10 minutes under a load of 2.16 kgf at 230°C was measured and rounded to the first decimal place, and the obtained value was defined as the MI.

[Swelling onset temperature]

(Measurement of $D_{10}$, $D_{50}$, and $D_{90}$)

The particle diameters of polyethylenes PE1 to PE14 (all in a powder form) mentioned below were measured using a laser particle size distribution analyzer with methanol as a dispersion medium. A cumulative particle size distribution from smaller particle sizes was prepared on the basis of the measurement, and particle diameters that attained cumulative percentages of 10%, 50%, and 90% were defined as $D_{10}$, $D_{50}$, and $D_{90}$, respectively, of each polyethylene.

(Measurement of swelling onset temperature $T_B$)

A swelling onset temperature $T_{10}$ of a polyethylene particle having a particle diameter of $D_{10}$ was determined as follows: polyethylene particles having a major axis diameter and a minor axis diameter (as for a plane figure of a particle observed under an optical microscope, a distance between parallel lines having the shortest interval was defined as the minor axis diameter of the particle, and a distance between parallel lines having the longest interval in a direction perpendicular thereto was defined as the major axis diameter of the particle) within a range of $D_{10} \pm 10\%$ were identified from a particle group of each polyethylene under an optical microscope, and one particle was arbitrarily collected therefrom. The collected one polyethylene particle (hereinafter, also referred to as the "measurement particle") was loaded onto a glass slide, and 0.05 mL of liquid paraffin was dropped to the measurement particle using a 1 mL syringe. Then, a glass cover was placed thereon so as to interpose the measurement particle.

Then, the glass slide was loaded onto a heat stage, and the temperature was allowed to increase from room temperature to 150°C under temperature increase conditions given below. The appearance of the measurement particle during temperature increase was photographed every 6 seconds under an optical microscope equipped with a camera. An equivalent circle diameter of the measurement particle was calculated from each of the obtained observation images.

The lowest temperature at which the equivalent circle diameter of the measurement particle became larger by 1% or more based on the equivalent circle diameter of the measurement particle at 80°C in a temperature range of 80°C or higher and 150°C or lower was defined as the swelling onset temperature of the measurement particle. Measurement was performed at 10 points, and an average value thereof was defined as a swelling onset temperature $T_{10}$ of each polyethylene.

(Temperature increase conditions)

Temperature increase rate from room temperature to 35°C: 5°C/min
Temperature increase rate in a range from 35°C to 80°C: 8°C/min
Temperature increase rate in a range from 80°C to 150°C: 5°C/min

Next, a swelling onset temperature $T_{50}$ of a polyethylene particle having a particle diameter of $D_{50}$, and a swelling onset temperature $T_{90}$ of a polyethylene particle having a particle diameter of $D_{90}$ were also determined in the same manner as in the swelling onset temperature $T_{10}$ using a collected polyethylene particle having a major axis diameter and a minor axis diameter within a range of $D_{50} \pm 10\%$, and a collected polyethylene particle having a major axis diameter and a minor axis diameter within a range of $D_{90} \pm 10\%$.

Finally, the swelling onset temperature T of each polyethylene was determined as follows:

$$T = \frac{T_{10}+T_{50}+T_{90}}{3}$$

[Swelling onset temperature difference (°C)]

The difference in swelling onset temperature between polyethylene that corresponded to the polyethylene A and polyethylene that corresponded to the polyethylene B was determined, and the absolute value thereof was defined as the swelling onset temperature difference.

[Thickness (μm)]

The thickness of the polyolefin film was measured at room temperature 23 $\pm$ 2°C using a microthickness meter "KBM(R)" manufactured by Toyo Seiki Seisaku-sho, Ltd.

[Porosity P (%)]

A 10-cm square specimen was cut off from the polyolefin film, the volume ($cm^3$) and mass (g) thereof were determined, and the porosity was calculated from those and the density ($g/cm^3$) using the following equation.

Porosity (%) = (Volume - Mass / Density) / Volume $\times$ 100

[Air permeability ($s/100\ cm^3$)]

Measurement was conducted in accordance with JIS P-8117. That is, the air resistance of the polyolefin film was measured using a Gurley-type air permeability meter "G-B2(R)" manufactured by Toyo Seiki Seisaku-sho, Ltd. under an atmosphere having a temperature of 23°C and a humidity of 40%, and defined as the air permeability.

[Film thickness-equivalent air permeability ($s/100\ cm^3$)]

The air permeability obtained as described above was divided by the film thickness, and the obtained value was defined as the film thickness-equivalent air permeability.

[Puncture strength (gf)]

A handy compression tester KES-G5(R) manufactured by Kato Tech Co. was used to fix the polyolefin film with a specimen holder having a diameter of 11.3 mm at the aperture. Next, the center portion of the polyolefin film fixed was subjected to a puncture test with a radius of curvature of the needle tip of 0.5 mm and at a puncture speed of 2 mm/sec under an atmosphere having a temperature of 23°C and a humidity of 40%, and the puncture strength (gf) as the maximum puncture load was provided.

[Basis weight (g/m$^2$)]

A 10-cm square specimen was cut off from the polyolefin film, and the mass thereof was measured using an electronic balance AEL-200 (trade name) manufactured by Shimadzu Corporation. The mass provided was multiplied by 100 to calculate the basis weight (g/m$^2$) of the specimen per 1 m$^2$.

[Basis weight-equivalent puncture strength Sm (gf/ (g/m$^2$)) ]

The puncture strength measured as described above was divided by the basis weight, and the obtained value was defined as the basis weight-equivalent puncture strength.

[Shutdown temperature Ts (°C)]

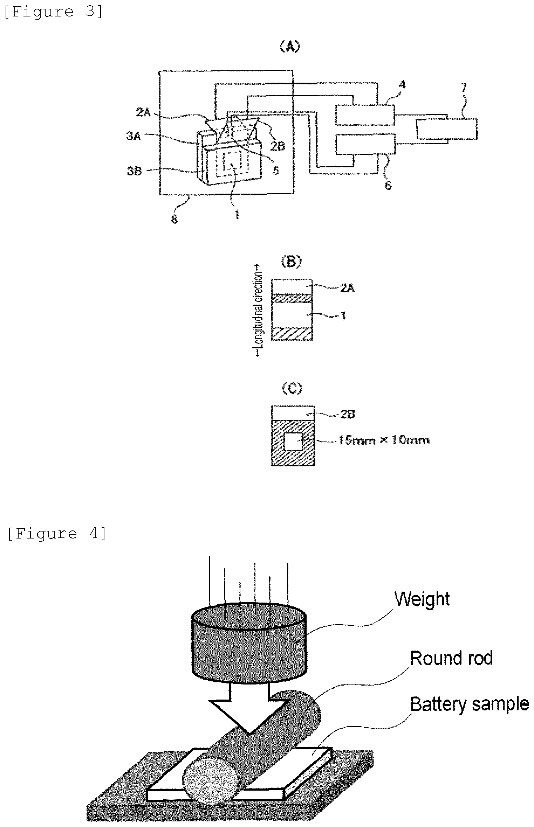

Figure 3(A) shows a schematic view of a measurement apparatus for a shutdown temperature. An electrical resistance measurement apparatus 4 ("AG-4311" manufactured by Ando Electric Co., Ltd.) was connected to nickel foils 2A and 2B having a thickness of 10 μm, a thermocouple 5 was connected to a thermometer 6, and a data collector 7 was connected to the electrical resistance measurement apparatus 4 and the thermometer 6. In this configuration, a polyolefin film 1 was heated by an oven 8.

More specifically, as shown in Figure 3(B), the polyolefin film 1 was stacked on the nickel foil 2A and fixed to the nickel foil 2A with Teflon(R) tape (the shaded area in the drawing) in the longitudinal direction. The polyolefin film 1 was impregnated with a 1 mol/L lithium borofluoride solution (solvent: a mixed solvent of propylene carbonate/ethylene carbonate/y-butyrolactone = volume ratio of 1/1/2) as an electrolyte solution. As shown in Figure 3(C), Teflon tape (the shaded area) was affixed onto the nickel foil 2B so that the foil 2B was masked except for a window portion of 15 mm × 10 mm in the center portion.

The nickel foil 2A and the nickel foil 2B were stacked so as to interpose the polyolefin film 1, and these two nickel foils were interposed between glass plates 3A and 3B from both sides. In this operation, the window portion of the foil 2B was positioned so as to face the polyolefin film 1. Subsequently, the two glass plates 3A and 3B were secured with clips. The thermocouple 5 was fixed to the glass plates with "Teflon(R)" tape.

In such an apparatus, the temperature and electrical resistance of the polyolefin film 1 were continuously measured. The temperature was allowed to increase from 25°C to 200°C at a rate of 15°C/min, and the electrical resistance value was measured at 1 V with an alternating current of 1 kHz. The shutdown temperature was determined by rounding off the second decimal point of the temperature value obtained when the electrical resistance value reached 10$^3$ Ω.

[120°C heat shrinkage rate (%)]

The polyolefin film was cut off in a size of 100 mm in the MD direction and 100 mm in the TD direction and allowed to stand for 1 hour in an oven of 120°C. In this operation, the sample was interposed between two paper sheets so as not to expose the sample directly to hot air. The sample was taken out of the oven and cooled, and its length (mm) was then measured. The heat shrinkage rate was calculated by the equation given below. Measurement was performed in the MD direction and the TD direction, and the obtained values were defined as the MD heat shrinkage rate and the TD heat shrinkage rate, respectively.

Heat shrinkage rate (%) = {(100 - Length after heating) / 100} × 100

[The number of unmelted gel defects (number/1000 m$^2$)]

A resin aggregate (gel-containing matter) in the polyolefin film was defined as a region that had an area of 100 μm in length × 100 μm or more in width and did not allow light to permeate when the polyolefin film was observed under a transmission-type optical microscope.

In the observation under a transmission-type optical microscope, the number of resin aggregates per 1000 $m^2$ area of a separator was measured and defined as the number of unmelted gel defects. The number of unmelted gel defects was evaluated in accordance with the following criteria.

A: The number of unmelted gel defects was 0 or more and 5 or less.
B: The number of unmelted gel defects was 6 or more and 14 or less.
C: The number of unmelted gel defects was 15 or more.

[Production of battery for evaluation]

A laminate-type lithium ion secondary battery was prepared by the following procedures a-1 to a-5.

(a-1) Production of positive electrode

90.4 parts by mass of lithium nickel manganese cobalt composite oxide (Ni:Mn:Co = 1:1:1 (element ratio), density: 4.70 g/cm³) as a positive electrode active material, 1.6 parts by mass of graphite powder (TIMREX "KS6", density: 2.26 g/cm³, number average particle diameter: 6.5 μm) and 3.8 parts by mass of acetylene black powder (density: 1.95 g/cm³, number average particle diameter: 48 nm) as a conductive assistant, and 4.2 parts by mass of polyvinylidene fluoride (density: 1.75 g/cm³) as a binder were mixed, and the mixture was dispersed in N-methylpyrrolidone to prepare a slurry. This slurry was applied by a die coater onto one surface of a 20-μm thick aluminum foil serving as a positive electrode collector, and dried at 130°C for 3 minutes. Then, the collector was compression-molded by a roll press to produce a positive electrode. In this operation, the amount of the positive electrode active material applied was 109 g/m².

(a-2) Production of negative electrode

87.6 parts by mass of graphite powder A (density: 2.23 g/cm³, number average particle diameter: 12.7 μm) and 9.7 parts by mass of graphite powder B (density: 2.27 g/cm³, number average particle diameter: 6.5 μm) as a negative electrode active material, and 1.4 parts by mass (in terms of solid content) of ammonium salt of carboxymethylcellulose (an aqueous solution having a solid concentration of 1.83 parts by mass) and 1.7 parts by mass (in terms of solid content) of diene rubber-based latex (an aqueous solution having a solid concentration of 40 parts by mass) as a binder were dispersed in purified water to prepare a slurry. This slurry was applied by a die coater onto one surface of a 12-μm thick copper foil serving as a negative electrode collector, and dried at 120°C for 3 minutes. Then, the collector was compression-molded by a roll press to produce a negative electrode. In this operation, the amount of the negative electrode active material applied was 52 g/m².

(a-3) Preparation of non-aqueous electrolyte solution

A non-aqueous electrolyte solution was prepared by dissolving $LiPF_6$ as a solute at a concentration of 1.0 mol/L in a mixed solvent of ethylene carbonate:ethylmethyl carbonate = 1:2 (volume ratio).

(a-4) Formation of adhesive layer

An adhesive layer was formed on the polyolefin film of each example by the following procedures.
A reaction container equipped with a stirrer, a reflux condenser, a dropping tank, and a thermometer was charged with 64 parts by mass of water and 0.25 parts by mass of sodium alkyl diphenyl ether disulfonate ("PELEX SS-L" manufactured by Kao Corp., solid content: 45%). While the temperature of the reaction container was kept at 80°C, 0.15 parts by mass of ammonium persulfate (2% aqueous solution) were added to the reaction container.
Aside from this, 24 parts by mass of methyl methacrylate (MMA), 34 parts by mass of butyl acrylate (BA), 1.5 parts by mass of acrylic acid (AA), 0.1 parts by mass of n-dodecyl mercaptan (nDDM), 1.5 parts by mass of PELEX SS-L, 0.15 parts by mass of ammonium persulfate, and 69 parts by mass of water were mixed by a homo-mixer at 6000 rpm for 5 minutes to produce an emulsion.
The emulsion, 5 minutes after ammonium persulfate was added as mentioned above, was added dropwise from the dropping tank to the reaction container over 150 minutes. After the completion of the dropwise addition of the emulsion, the temperature of the reaction container was kept at 80°C and maintained for 60 minutes, and the reaction container was then cooled to room temperature. Next, the reaction container was adjusted to pH of 8.0 by the addition of a 25% aqueous ammonia solution and further adjusted to a solid content to 40 parts by mass by the addition of water to obtain an acrylic emulsion as an adhesive coating liquid.

A coating liquid was prepared by uniformly dispersing 7.5 parts by mass of the obtained acrylic emulsion in 92.5 parts by mass of water, and applied onto a surface of the polyolefin film using a gravure coater. The coated product was dried at 60°C to remove water. Another surface was further coated with the coating solution in the same manner as above and dried to obtain a separator having an adhesive layer.

(a-5) Battery production

The positive electrode, the negative electrode, and the non-aqueous electrolyte solution obtained in the above a-1 to a-3, and the separator obtained in the above a-4 were used, and a laminate-type secondary battery having a size of 100 mm × 60 mm and a capacity of 3000 mAh was produced by constant-current constant-voltage (CCCV) charging for 3 hours under conditions involving a current value of 1 A (0.3 C) and a cutoff battery voltage of 4.2 V.

(a-6) Capacity measurement

The laminate-type secondary battery assembled as described above was constant-current constant-voltage (CCCV) charged for 6 hours under conditions involving a current value of 1500 mA (0.5 C) and a cutoff battery voltage of 4.2 V. In this operation, the current value immediately before the completion of charging was almost 0. Then, the battery was left (aged) for 1 week in an atmosphere of 25°C.

Subsequently, the battery was subjected to a cycle of constant-current constant-voltage (CCCV) charging for 3 hours under conditions involving a current value of 3000 mA (1.0 C) and a cutoff battery voltage of 4.2 V, and discharging to a battery voltage of 3.0 V at a constant current value (CC) of 3000 mA. In this operation, the discharge capacity was defined as the initial discharge capacity X. A battery having the initial discharge capacity X within 3000 ± 10 mAh was subjected to the evaluations given below as a battery for evaluation.

[Rapid temperature increase test]

The battery for evaluation was housed in a thermostat "PLM-73S" (manufactured by Futaba Kagaku Co., Ltd.) set to 25°C, and connected to a charge and discharge apparatus "ACD-01" (manufactured by Aska Electronic Co., Ltd.). Subsequently, a charge and discharge cycle of charging of the battery for evaluation at a constant current of 0.1 C until reaching a voltage of 4.2 V, and charging at a constant voltage of 4.2 V for 1 hour, followed by discharging to 3.0 V at a constant current of 0.1 C was repeated three times. Then, the lithium ion secondary battery was charged at a constant current of 0.1 C until reaching a voltage of 4.2 V, and thereby fully charged. 1 C represents a current value when the whole capacity of the battery is charged in 1 hour, and 0.1 C represents a current value of 1/10 thereof.

An aluminum block heater was placed in an explosion-proof thermostat, and the aluminum block was filled with a non-flammable fluorinated paraffin oil. The fully charged lithium ion secondary battery was taken out of the thermostat and immersed in the fluorinated paraffin oil in the aluminum block heater. Then, the temperature of the aluminum block heater was allowed to increase to 150°C at a rate of 15°C/min, and the behavior of the lithium ion secondary battery was observed. After a lapse of 1 minute in the state of 150°C, the presence or absence of smoking and/or burst was confirmed. Measurement was performed at N = 5, and evaluation results were given A (satisfactory) when all the lithium ion secondary batteries had no abnormality, given B (acceptable) when smoking or burst occurred in one or two batteries, and given C (poor) when smoking or burst occurred in three or more batteries.

[Impact test]

Figure 4 is a schematic view of the impact test.

In the impact test, a round rod ($\phi$ = 15.8 mm) was placed on the battery sample (the battery for evaluation mentioned above) disposed on a test table such that the battery sample and the round rod were substantially orthogonal to each other. An 18.2-kg weight was dropped from a height of 61 cm toward the upper surface of the round rod, and the influence of the impact on the battery sample was observed.

Specific procedures of the impact test in examples and comparative examples were as follows.

First, the battery for evaluation mentioned above was constant-current constant-voltage (CCCV) charged for 3 hours under conditions involving a current value of 3000 mA (1.0 C) and a cutoff battery voltage of 4.2 V.

Next, under an environment of 25°C, the battery for evaluation was placed horizontally on a flat plate, and a stainless round rod having a diameter of 15.8 mm was disposed so as to traverse the center portion of the battery for evaluation. The round rod was disposed such that its major axis was parallel with the longitudinal direction of the battery for evaluation. An 18.2-kg weight was dropped from a height of 61 cm such that an impact was applied from the round rod disposed on the center portion of the battery for evaluation perpendicularly in the vertical axis direction of the battery for evaluation. After the collision, the surface temperature of the battery for evaluation was measured. The test was conducted on 5 battery samples at time, and evaluation was conducted in accordance with the following criteria. As for this evaluation item, samples graded as the criteria A (satisfactory) and B (acceptable) passed the test. The surface temperature of the battery refers to a temperature measured at a position 1 cm from the bottom side of the outer packaging of the battery with a thermocouple (type K-seal type).

A (satisfactory): The surface temperature was 60°C or less in all the battery samples.
B (acceptable): Some battery samples had a surface temperature of more than 60°C and 100°C or less, but the surface temperature was 100°C or less in all the battery samples.
C (fail): The surface temperature exceeded 100°C in one or more battery samples, or ignition occurred in one or more battery samples.

[Output test (25°C)]

Under an atmosphere of 25°C, the 1 C charge capacity and the 5 C discharge capacity of the battery for evaluation were measured up to a discharge cutoff voltage of 3 V in the constant temperature state. 5 C capacity/1 C capacity was defined as the value of output characteristics. The value of output characteristics was evaluated in accordance with the following criteria.

A: The value of output characteristics was 0.90 or more.
B: The value of output characteristics was 0.75 or more and less than 0.90.
C: The value of output characteristics was less than 0.75.

[Production of PE1 to PE14 and PP1]

(Preparation of solid catalytic component [A])

(1) Synthesis of starting material (a-1)

An 8 L stainless autoclave thoroughly purged with nitrogen was charged with 2,000 mL of a hexane solution containing 1 mol/L organic magnesium compound represented by $AlMg_6(C_4H_9)_{12}(C_2H_5)_3$ (corresponding to 2000 mmol in total of magnesium and aluminum). To this autoclave, 146 mL of a hexane solution containing 5.47 mol/L n-butanol was added dropwise thereto over 3 hours with stirring at 50°C. After the completion of the dropwise addition, the line was washed with 300 mL of hexane. The stirring was further continued at 50°C over 2 hours. After the completion of the reaction, the reaction solution was cooled to ordinary temperature and used as a starting material (a-1) . The starting material (a-1) had a magnesium concentration of 0.704 mol/L.

(2) Synthesis of starting material (a-2)

An 8 L stainless autoclave thoroughly purged with nitrogen was charged with 2,000 mL of a hexane solution containing 1 mol/L organic magnesium compound represented by $AlMg_6(C_4H_9)_{12}(C_2H_5)_3$ (corresponding to 2000 mmol in total of magnesium and aluminum), and pressure-fed with 240 mL of a hexane solution containing 8.33 mol/L methyl hydrogen polysiloxane (manufactured by Shin-Etsu Chemical Co., Ltd.) with stirring at 80°C, and the stirring was further continued at 80°C over 2 hours. After the completion of the reaction, the reaction solution was cooled to ordinary temperature and used as a starting material (a-2). The starting material(a-2) had a concentration of 0.786 mol/L in total of magnesium and aluminum.

(3) Synthesis of carrier (A-1)

An 8 L stainless autoclave thoroughly purged with nitrogen was charged with 1,000 mL of a hexane solution containing 1 mol/L hydroxytrichlorosilane. To this autoclave, 1340 mL of a hexane solution of the organic magnesium compound as the starting material (a-1) (corresponding to 943 mmol of magnesium) was added dropwise at 65°C over 3 hours, and the reaction was further continued with stirring at 65°C for 1 hour. After the completion of the reaction, the supernatant was removed, and the resulting solid was washed with 1,800 mL of hexane four times to obtain a carrier (A-1). As a result of analyzing this carrier, the amount of magnesium contained per g of the solid was 7.5 mmol.

(4) Preparation of solid catalytic component [A]

To 1,970 mL of the hexane slurry containing 110 g of the carrier (A-1), 103 mL of a hexane solution containing 1 mol/L titanium tetrachloride and 131 mL of the starting material (a-2) were added at the same time over 3 hours with stirring at 10°C. After the addition, the reaction was continued at 10°C for 1 hour. After the completion of the reaction, the supernatant was removed, and unreacted starting material components were removed by washing with hexane four times to prepare a solid catalytic component [A].

(Polymerization)

Hexane, ethylene, hydrogen, and a catalyst were continuously fed to a vessel-type 300 L polymerization reactor equipped with a stirring apparatus. The polymerization pressure was 0.6 MPa. The polymerization temperature was kept at 83°C by jacket cooling.

The solid catalytic component [A] was used as a main catalyst, and a 9:1 mixture of triisobutyl aluminum and diisobutyl aluminum hydride was used as a promoter. The promoter was added to the polymerization reactor at a rate of 10 mmol/hr. The main catalyst was fed such that the polyethylene manufacturing rate was 10 kg/hr and the slurry concentration in the polymerization reactor was 30% by mass. Hexane was fed such that the liquid level was kept constant. Hydrogen was continuously fed by a pump such that the hydrogen concentration based on gas phase ethylene was 45 mol%. The polymer slurry was continuously discharged to a flash drum having a pressure of 0.05 MPa and a temperature of 70°C to separate unreacted ethylene. The separated polyethylene particles were dried at 90°C by nitrogen blow. In this drying step, steam was sprayed to the particles after polymerization to carry out the deactivation of the catalyst and the promoter. The obtained polyethylene particles were sifted through a sieve having an opening of 425 $\mu$m while particles that did not pass through the sieve were removed to obtain ethylene polymer particles PE1. The molecular weight of the PE1 was $7.0 \times 10^4$.

PE2 to PE14 were produced on the basis of the manufacturing conditions of PE1 by appropriately adjusting the polymerization pressure, the polymerization temperature, the hydrogen concentration, and/or the drying temperature as shown in Tables 1 and 2. All of PE1 to PE14 were in a powder shape.

As for PE3, PE7, PE13, and PE14 here, a copolymer component was added, and in the polymerization step, 1-butene, in addition to hexane, ethylene, hydrogen, and the catalyst, was continuously fed such that the 1-butene concentration was in a predetermined concentration based on gas phase ethylene. The 1-butene concentration in the manufacturing of each PE is shown in Tables 1 and 2.

A commercially available product of homopolypropylene was used as polypropylene (PP1).

Results of evaluating PE1 to PE14 and PP1 obtained as described above are also shown in Tables 1 and 2.

[Example 1]

12.8 parts by mass of PE1 as the first polyethylene and 19.2 parts by mass of PE10 as the second polyethylene were mixed using a Henschel mixer, and 0.3 parts by mass of pentaerythrityl-tetrakis-[3-(3,5-di-t-butyl-4-hydroxyphenyl)propionate] as an antioxidant were further added and preliminarily mixed thereto. The obtained mixture was fed to the polyolefin feed port of a twinscrew co-rotating extruder via a feeder. Subsequently, melt-kneading was carried out, and liquid paraffin (plasticizer; LP) was fed to the cylinder of the twinscrew extruder through a side feed in two sessions such that the amount of the liquid paraffin in the entire mixture (100.3 parts by mass) to be extruded reached 68.0 parts by mass.

Specifically, 40.8 parts by mass of the liquid paraffin (60% of the total amount of the liquid paraffin to be added) was fed from the first plasticizer feed port disposed downstream of the polyolefin feed port (step A) in the extruder (step B). Subsequently, 27.2 parts by mass of the liquid paraffin (40% of the total amount of the liquid paraffin to be added) was fed from the second plasticizer feed port disposed further downstream of the first plasticizer feed port (step C). Setting temperatures were 160°C for a kneading portion and 200°C for a T-die. Subsequently, the melt-kneaded product was extruded into a sheet form via the T-die and cooled on a cooling roll controlled to a surface temperature of 70°C to obtain sheet-like molded product having a thickness of 2,000 $\mu$m.

The obtained sheet-like molded product was introduced into a simultaneous biaxial stretching machine to obtain a primary stretched film (primary stretching step). Setting stretch conditions were a MD stretching ratio of 7 times, a TD stretching ratio of 6.38 times, and MD and TD stretching temperatures of 118°C. Subsequently, the obtained primary stretched film was introduced into a methylene chloride tank and sufficiently immersed in methylene chloride to extract and remove the plasticizer liquid paraffin. Thereafter, methylene chloride was removed by drying to provide an extracted film.

Subsequently, the extracted film was introduced into a TD uniaxial tenter for heat setting. In the heat setting step, stretching operation was performed under conditions involving a TD stretching temperature of 130°C and a TD stretching ratio of 2.00 times, followed by relaxation operation under conditions involving a relaxation temperature of 135°C and a relaxation ratio of 0.80 times.

Various characteristics of the polyolefin film obtained as described above were evaluated by the methods described above. The evaluation results are shown in Table 4.

[Examples 2 to 21 and Comparative Examples 1 to 9]

Each polyolefin film was obtained in the same manner as in Example 1 except that the starting material type, the starting material compositional ratio, the extrusion conditions, the sheet thickness, the stretching step conditions, and the heat setting step conditions were each set as shown in Tables 3, 5, and 7. "Simultaneous" in the stretching method here refers to a stretching method in which MD (the machine direction when the polyolefin film is continuously molded) stretching and TD (the direction traversing the MD of the polyolefin film at an angle of 90°) stretching are simultaneously carried out, and "sequential" means a stretching method in which MD stretching and TD stretching are independently carried out.

Various characteristics of the obtained polyolefin films were evaluated by the methods described above. The evaluation results are shown in Tables 4, 6, and 8. "Swelling onset temperature difference" in each table is indicated by "-" if a component corresponding to the polyethylene A according to the present embodiment was not used. The unit of "sheet thickness" in each table is $\mu$m.

[Table 1]

|  |  | PE1 | PE2 | PE3 | PE4 | PE5 | PE6 | PE7 | PE8 |
|---|---|---|---|---|---|---|---|---|---|
| Polymerization temperature | °C | 83 | 83 | 83 | 83 | 83 | 83 | 83 | 83 |
| Polymerization pressure | MPa | 0.6 | 0.6 | 0.6 | 0.6 | 0.6 | 0.6 | 0.6 | 0.6 |
| Hydrogen concentration | mol% | 40 | 49 | 40 | 40 | 30 | 20 | 17 | 11 |
| 1-Butene concentration | mol% | 0 | 0 | 10 | 0 | 0 | 0 | 1 | 0 |
| Drying temperature | °C | 100 | 100 | 90 | 70 | 100 | 100 | 70 | 70 |
| Viscosity average molecular weight | $10^4$g/mol | 7 | 5 | 7 | 7 | 10 | 15 | 18 | 30 |
| Melt index | g/10min | 6 | 18.5 | 6 | 8 | 2 | 0.6 | 0.3 | 0.08 |
| Melting point of polyolefin starting material | °C | 134.7 | 134.3 | 125 | 134.3 | 135.1 | 136.5 | 133 | 134.7 |
| Swelling onset temperature | °C | 125 | 124 | 118 | 121 | 127 | 128 | 120 | 126 |

[Table 2]

|  |  | PE9 | PE10 | PE11 | PE12 | PE13 | PE14 | PP1 |
|---|---|---|---|---|---|---|---|---|
| Polymerization temperature | °C | 83 | 83 | 83 | 73 | 83 | 83 | - |
| Polymerization pressure | MPa | 0.6 | 0.6 | 0.6 | 0.6 | 0.6 | 0.6 | - |
| Hydrogen concentration | mol% | 6 | 4.5 | 3 | 0.02 | 9 | 30 | - |
| 1-Butene concentration | mol% | 0 | 0 | 0 | 0 | 1 | 2 | - |
| Drying temperature | °C | 70 | 70 | 70 | 70 | 70 | 100 | - |
| Viscosity average molecular weight | $10^4$g/mol | 70 | 90 | 150 | 520 | 40 | 11 | 40 |
| Melt index | g/10min | - | - | - | - | 0.04 | 1.2 | - |
| Melting point of polyolefin starting material | °C | 135.5 | 135.8 | 136.3 | 136.5 | 127.1 | 133.5 | 162.2 |
| Swelling onset temperature | °C | 131 | 132 | 133 | 134 | 116 | 122 | - |

[Table 3]

| Film formation conditions | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Starting material type | First polyethylene | PE1 | PE1 | PE1 | PE1 | PE5 | PE6 | PE2 | PE4 | PE1 | PE1 |
| | Second polyethylene | PE10 | PE10 | PE10 | PE10 | PE10 | PE10 | PE10 | PE10 | PE11 | PE10 |
| | Third polyethylene | - | - | - | - | - | - | - | - | - | - |
| | Polypropylene | - | - | - | - | - | - | - | - | - | - |
| | Plasticizer | LP | LP | LP | LP | LP | LP | LP | LP | LP | LP |
| Swelling onset temperature difference (°C) | | 7 | 7 | 7 | 7 | 5 | 4 | 8 | 11 | 8 | 7 |
| Starting material compositional ratio | First polyethylene (parts by mass) | 12.8 | 12.8 | 12.8 | 12.8 | 13.6 | 13.6 | 12.8 | 12.8 | 12.0 | 21.6 |
| | Second polyethylene (parts by mass) | 19.2 | 19.2 | 19.2 | 19.2 | 20.4 | 20.4 | 19.2 | 19.2 | 18.0 | 14.4 |
| | Third polyethylene (parts by mass) | - | - | - | - | - | - | - | - | - | - |
| | Polypropylene (parts by mass) | - | - | - | - | - | - | - | - | - | - |
| | Plasticizer (parts by mass) | 68.0 | 68.0 | 68.0 | 68.0 | 66.0 | 66.0 | 68.0 | 68.0 | 70.0 | 64.0 |

24

| Film formation conditions | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Extrusion conditions | Amount of plasticizer fed in step B (parts by mass) | 40.8 | 40.8 | 40.8 | 40.8 | 39.6 | 39.6 | 40.8 | 40.8 | 42.0 | 38.4 |
| | Amount of plasticizer fed in step C (parts by mass) | 27.2 | 27.2 | 27.2 | 27.2 | 26.4 | 26.4 | 27.2 | 27.2 | 28.0 | 25.6 |
| | Amount of plasticizer fed in step B based on total amount of plasticizer (parts by mass) | 60.0 | 60.0 | 60.0 | 60.0 | 60.0 | 60.0 | 60.0 | 60.0 | 60.0 | 60.0 |
| Sheet thickness | | 2000 | 2000 | 2100 | 2000 | 1900 | 1900 | 2200 | 2000 | 2000 | 1800 |
| Stretching conditions | MD stretching ratio (times) | 7 | 7 | 7 | 7 | 7 | 7 | 7 | 7 | 7 | 7 |
| | MD stretching temperature (°C) | 118 | 118 | 116 | 121 | 118 | 118 | 118 | 120 | 120 | 118 |
| | TD stretching ratio (times) | 6.38 | 6.38 | 6.38 | 6.38 | 6.38 | 6.38 | 6.38 | 6.38 | 6.38 | 6.38 |
| | TD stretching temperature (°C) | 118 | 118 | 116 | 121 | 118 | 118 | 118 | 120 | 120 | 118 |
| | Stretching method | Simultaneous | Simultaneous | Simultaneous | Simultaneous | Simultaneous | Simultaneous | Simultaneous | Simultaneous | Simultaneous | Simultaneous |

(continued)

| Film formation conditions | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | TD stretching ratio (times) | 2.00 | 2.00 | 2.20 | 2.00 | 2.00 | 2.00 | 2.00 | 2.00 | 2.00 | 2.00 |
| | TD stretching temperature (°C) | 130 | 130 | 130 | 130 | 130 | 130 | 130 | 130 | 130 | 130 |
| Heat setting conditions | Relaxation ratio (times) | 0.80 | 0.80 | 0.80 | 0.80 | 0.80 | 0.80 | 0.80 | 0.80 | 0.80 | 0.80 |
| | Relaxation temperature (°C) | 135 | 133 | 136 | 133 | 135 | 135 | 134 | 134 | 135 | 135 |

[Table 4]

| Polyolefin film characteristics | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Peak temperature Tm1 in first temperature increase course (°C) | | 138.8 | 139.1 | 140.5 | 138.2 | 138.8 | 138.6 | 138.7 | 138.5 | 138.7 | 138.3 |
| Melting point Tm2 of film (°C) | | 136.2 | 136.2 | 136.2 | 136.2 | 136.4 | 136.5 | 135.5 | 135.8 | 136.5 | 136.2 |
| Total amount of side chain having 3 carbon atoms and side chain having 4 carbon atoms (mol%) | | 0.01 | 0.01 | 0.01 | 0.01 | 0.01 | 0.01 | 0.01 | 0.01 | 0.01 | 0.01 |
| Film thickness (μm) | | 10.0 | 10.0 | 10.0 | 10.0 | 10.0 | 10.0 | 10.0 | 10.0 | 10.0 | 10.0 |
| Porosity P (%) | | 36 | 45 | 37 | 43 | 35 | 35 | 44 | 36 | 36 | 36 |
| Air permeability (s/100cm$^3$) | | 150 | 90 | 150 | 95 | 160 | 165 | 95 | 150 | 160 | 170 |
| Film thickness-equivalent air permeability Gt (s/100cm$^3$) | | 15 | 9 | 15 | 10 | 16 | 17 | 10 | 15 | 16 | 17 |
| LN(Gt)-(-0.070×P+5.8) | | -0.572 | -0.453 | -0.502 | -0.539 | -0.577 | -0.547 | -0.469 | -0.572 | -0.507 | -0.447 |
| Puncture strength (gf) | | 525 | 460 | 600 | 400 | 515 | 515 | 460 | 525 | 535 | 470 |
| Basis weight-equivalent puncture strength Sm (gf/(g/m$^2$)) | | 86 | 88 | 100 | 74 | 83 | 83 | 86 | 86 | 88 | 77 |
| Shutdown temperature Ts (°C) | | 140.5 | 141.0 | 142.5 | 139.0 | 140.6 | 140.7 | 140.0 | 140.4 | 140.7 | 137.5 |
| Ts-(0.13×Sm+130) | | -0.7 | -0.4 | -0.5 | -0.6 | -0.2 | -0.1 | -1.2 | -0.8 | -0.7 | -2.5 |
| MD heat shrinkage rate at 120°C (%) | | 5.2 | 8.1 | 6.5 | 5.5 | 6.7 | 6.9 | 8.9 | 7.0 | 7.5 | 3.2 |
| TD heat shrinkage rate at 120°C (%) | | 3.2 | 9.6 | 9.5 | 5.3 | 3.3 | 3.8 | 9.9 | 7.5 | 8.5 | 1.8 |
| Rapid temperature increase test | The number of batteries that smoked or burst | 0 | 2 | 2 | 0 | 1 | 2 | 0 | 0 | 1 | 0 |
| | Assessment | A | B | B | A | B | B | A | A | B | A |
| Impact test | Cell temperature (largest among N=5) (number) | 42 | 58 | 30 | 85 | 40 | 38 | 44 | 44 | 35 | 79 |
| | Assessment | A | A | A | B | A | A | A | A | A | B |

| Polyolefin film characteristics | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Output test | Value of output characteristics (5 C capacity/1 C capacity) | 0.85 | 0.92 | 0.86 | 0.91 | 0.83 | 0.82 | 0.9 | 0.85 | 0.85 | 0.82 |
| | Assessment | B | A | B | A | B | B | A | B | B | B |
| The number of unmelted gel defects | Number (/1000m$^2$) | 4 | 4 | 4 | 4 | 3 | 1 | 8 | 12 | 6 | 5 |
| | Assessment | A | A | A | A | A | A | B | B | B | A |

EP 4 410 880 A1

[Table 5]

| Film formation conditions | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Starting material type | First polyethylene | PE1 | PE1 | PE1 | PE1 | PE1 | PE1 | PE1 | PE1 | PE1 | PE1 | PE4 |
| | Second polyethylene | PE10 | PE12 | PE10 | PE10 | PE10 | PE10 | PE10 | PE10 | PE10 | PE9 | PE10 |
| | Third polyethylene | - | - | - | - | - | - | - | - | - | - | - |
| | Polypropylene | - | - | PP1 | - | - | - | - | - | - | - | - |
| | Plasticizer | LP | LP | LP | LP | LP | LP | LP | LP | LP | LP | LP |
| Swelling onset temperature difference (°C) | | 7 | 9 | 7 | 7 | 7 | 7 | 7 | 7 | 7 | 6 | 11 |
| Starting material compositional ratio | First polyethylene (parts by mass) | 21.6 | 18.0 | 19.2 | 19.2 | 19.2 | 19.2 | 19.2 | 19.2 | 19.2 | 20.4 | 16.0 |
| | Second polyethylene (parts by mass) | 14.4 | 12.0 | 10.6 | 12.8 | 12.8 | 12.8 | 12.8 | 12.8 | 12.8 | 13.6 | 24.0 |
| | Third polyethylene (parts by mass) | - | - | - | - | - | - | - | - | - | - | - |
| | Polypropylene (parts by mass) | - | - | 2.2 | - | - | - | - | - | - | - | - |
| | Plasticizer (parts by mass) | 64.0 | 70.0 | 68.0 | 68.0 | 68.0 | 68.0 | 68.0 | 68.0 | 68.0 | 66.0 | 60.0 |

(continued)

| Film formation conditions | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Extrusion conditions | Amount of plasticizer fed in step B (parts by mass) | 38.4 | 42.0 | 40.8 | 40.8 | 40.8 | 40.8 | 34.0 | 61.2 | 68.0 | 39.6 | 60.0 |
| | Amount of plasticizer fed in step C (parts by mass) | 25.6 | 28.0 | 27.2 | 27.2 | 27.2 | 27.2 | 34.0 | 6.8 | 0.0 | 26.4 | 0.0 |
| | Amount of plasticizer fed in step B based on total amount of plasticizer (parts by mass) | 60.0 | 60.0 | 60.0 | 60.0 | 60.0 | 60.0 | 50.0 | 90.0 | 100.0 | 60.0 | 100.0 |
| Sheet thickness | | 1800 | 2000 | 2000 | 1200 | 800 | 900 | 2000 | 2000 | 2000 | 1800 | 900 |
| Stretching conditions | MD stretching ratio (times) | 10 | 7 | 7 | 7 | 7 | 7 | 7 | 7 | 7 | 7 | 7 |
| | MD stretching temperature (°C) | 118 | 120 | 118 | 120 | 120 | 120 | 118 | 118 | 118 | 118 | 118 |
| | TD stretching ratio (times) | 10 | 6.38 | 6.38 | 6.38 | 6.38 | 6.38 | 6.38 | 6.38 | 6.38 | 6.38 | 6.38 |
| | TD stretching temperature (°C) | 118 | 120 | 118 | 120 | 120 | 120 | 118 | 118 | 118 | 118 | 118 |
| | Stretching method | Simultaneous | Simultaneous | Simultaneous | Simultaneous | Simultaneous | Simultaneous | Simultaneous | Simultaneous | Simultaneous | Simultaneous | Simultaneous |

(continued)

| Film formation conditions | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Heat setting conditions | TD stretching ratio (times) | 2.00 | 2.00 | 2.00 | 2.00 | 2.00 | 2.20 | 2.00 | 2.00 | 2.00 | 2.00 | 2.00 |
| | TD stretching temperature (°C) | 132 | 130 | 130 | 130 | 130 | 130 | 130 | 130 | 130 | 130 | 130 |
| | Relaxation ratio (times) | 0.80 | 0.80 | 0.80 | 0.80 | 0.80 | 0.95 | 0.80 | 0.80 | 0.80 | 0.80 | 0.80 |
| | Relaxation temperature (°C) | 136 | 135 | 135 | 132 | 132 | 132 | 135 | 135 | 135 | 135 | 135 |

[Table 6]

| Polyolefin film characteristics | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|
| Peak temperature Tm1 in first temperature increase course (°C) | 138.5 | 139.1 | 138.9 | 138.5 | 138.9 | 138.8 | 138.7 | 138.6 | 138.8 | 138.5 | 139 |
| Melting point Tm2 of film (°C) | 136.2 | 135.3 | 136.0 | 135.0 | 136.2 | 136.2 | 136.2 | 136.2 | 136.2 | 134.7 | 135.0 |
| Total amount of side chain having 3 carbon atoms and side chain having 4 carbon atoms (mol%) | 0.01 | 0.01 | 0.01 | 0.02 | 0.02 | 0.02 | 0.02 | 0.02 | 0.01 | 0.03 | 0.01 |
| Film thickness ($\mu$m) | 10.0 | 10.0 | 10.0 | 6.0 | 4.5 | 4.5 | 10.0 | 10.0 | 10.0 | 10.0 | 5.4 |
| Porosity P (%) | 36 | 36 | 36 | 43 | 36 | 40 | 36 | 36 | 36 | 36 | 42 |
| Air permeability (s/100cm$^3$) | 175 | 165 | 155 | 90 | 125 | 90 | 150 | 150 | 150 | 145 | 200 |
| Film thickness-equivalent air permeability Gt (s/100cm$^3$) | 18 | 17 | 16 | 15 | 28 | 20 | 15 | 15 | 15 | 15 | 37 |
| LN(Gt)-(-0.070×P+5.8) | -0.418 | -0.477 | -0.539 | -0.082 | 0.044 | -0.004 | -0.572 | -0.572 | -0.572 | -0.606 | 0.752 |
| Puncture strength (gf) | 525 | 550 | 510 | 260 | 240 | 225 | 525 | 525 | 525 | 480 | 244 |
| Basis weight-equivalent puncture strength Sm (gf/(g/m$^2$)) | 86 | 90 | 84 | 80 | 88 | 88 | 86 | 86 | 86 | 79 | 82 |
| Shutdown temperature Ts (°C) | 138.8 | 139.5 | 140.5 | 140.3 | 141.2 | 141.3 | 140.5 | 140.5 | 140.5 | 139.6 | 137.4 |
| Ts-(0.13×Sm+130) | -2.4 | -2.3 | -0.4 | -0.1 | -0.2 | -0.1 | -0.7 | -0.7 | -0.7 | -0.7 | -3.3 |
| MD heat shrinkage rate at 120°C (%) | 4.9 | 8.9 | 5.9 | 3.5 | 5.0 | 6.5 | 5.2 | 5.2 | 5.2 | 4.8 | 3.4 |
| TD heat shrinkage rate at 120°C (%) | 2.9 | 10.5 | 3.9 | 5.5 | 3.0 | 5.5 | 3.2 | 3.2 | 3.2 | 2.5 | 6.8 |

EP 4 410 880 A1

32

| Polyolefin film characteristics | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Rapid temperature increase test | The number of batteries that smoked or burst | 0 | 2 | 0 | 1 | 2 | 1 | 0 | 0 | 0 | 0 | 0 |
| | Assessment | A | B | A | B | B | B | A | A | A | A | A |
| Impact test | Cell temperature (largest among N = 5) (number) | 38 | 32 | 42 | 58 | 89 | 90 | 42 | 42 | 42 | 71 | 39 |
| | Assessment | A | A | A | A | B | B | A | A | A | B | A |
| Output test | Value of output characteristics (5 C capacity/1 C capacity) | 0.82 | 0.85 | 0.82 | 0.93 | 0.79 | 0.82 | 0.85 | 0.85 | 0.85 | 0.85 | 0.76 |
| | Assessment | B | B | B | A | B | B | B | B | B | B | B |
| The number of unmelted gel defects | Number (/1000m$^2$) | 5 | 8 | 4 | 5 | 5 | 5 | 8 | 9 | 14 | 3 | 8 |
| | Assessment | A | B | A | A | A | A | B | B | B | A | B |

EP 4 410 880 A1

33

[Table 7]

| Film formation conditions | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Starting material type | First polyethylene | PE3 | PE8 | PE1 | PE7 | PE7 | PE7 | PE13 | PE14 | PE14 |
| | Second polyethylene | PE10 | PE10 | PE10 | PE10 | - | - | PE10 | PE8 | PE10 |
| | Third polyethylene | - | - | - | - | - | - | - | PE9 | - |
| | Polypropylene | - | - | - | - | PP1 | - | - | PP1 | - |
| | Plasticizer | LP | LP | LP | LP | LP | LP | LP | LP | LP |
| Swelling onset temperature difference (°C) | | - | - | 7 | - | - | - | - | 9 | 7 |
| Starting material compositional ratio | First polyethylene (parts by mass) | 19.2 | 18.0 | 15.0 | 18.0 | 24.0 | 35.0 | 11.2 | 8.2 | 14.0 |
| | Second polyethylene (parts by mass) | 12.8 | 12.0 | 10.0 | 12.0 | - | - | 16.8 | 10.5 | 21.0 |
| | Third polyethylene (parts by mass) | - | - | - | - | - | - | - | 3.5 | - |
| | Polypropylene (parts by mass) | - | - | - | - | 6.0 | - | - | 2.7 | - |
| | Plasticizer (parts by mass) | 68.0 | 70.0 | 75.0 | 70.0 | 70.0 | 65.0 | 72.0 | 61.0 | 65.0 |

EP 4 410 880 A1

34

| Film formation conditions | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Extrusion conditions | Amount of plasticizer fed in step B (parts by mass) | 40.8 | 42.0 | 45.0 | 42.0 | 42.0 | 39.0 | 43.2 | 36.6 | 39.0 |
| | Amount of plasticizer fed in step C (parts by mass) | 27.2 | 28.0 | 30.0 | 28.0 | 28.0 | 26.0 | 28.8 | 24.4 | 26.0 |
| | Amount of plasticizer fed in step B based on total amount of plasticizer (parts by mass) | 60.0 | 60.0 | 60.0 | 60.0 | 60.0 | 60.0 | 60.0 | 60.0 | 60.0 |
| Sheet thickness | | 2000 | 2000 | 2000 | 2000 | 1600 | 1600 | 1120 | 1650 | 1200 |
| Stretching conditions | MD stretching ratio (times) | 7 | 7 | 7 | 7 | 10 | 9 | 7 | 7 | 7 |
| | MD stretching temperature (°C) | 118 | 118 | 122 | 118 | 113 | 110 | 121 | 124 | 120 |
| | TD stretching ratio (times) | 6.38 | 6.38 | 6.38 | 6.38 | 10 | 9 | 6.38 | 6.38 | 6.38 |
| | TD stretching temperature (°C) | 118 | 118 | 122 | 118 | 113 | 110 | 120 | 125 | 120 |
| | Stretching method | Simultaneous | Simultaneous | Simultaneous | Simultaneous | Sequential | Simultaneous | Simultaneous | Simultaneous | Simultaneous |

EP 4 410 880 A1

(continued)

| Film formation conditions | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Heat setting conditions | TD stretching ratio (times) | 2.00 | 2.00 | 2.00 | 2.00 | 1.00 | 1.00 | 2.00 | 1.80 | 2.00 |
| | TD stretching temperature (°C) | 130 | 130 | 130 | 130 | 125 | 125 | 130 | 129 | 128 |
| | Relaxation ratio (times) | 0.80 | 0.80 | 0.80 | 0.80 | 1.00 | 1.00 | 0.80 | 0.75 | 0.80 |
| | Relaxation temperature (°C) | 131 | 135 | 135 | 132 | 122 | - | 132 | 129 | 132 |

[Table 8]

| Polyolefin film characteristics | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Peak temperature Tm1 in first temperature increase course (°C) | 137.1 | 138.7 | 137.5 | 138.5 | 137.6 | 135 | 135.2 | 136.6 | 136.9 |
| Melting point Tm2 of film (°C) | 132 | 136.0 | 136.2 | 133.0 | 133.0 | 132.0 | 131.1 | 133.0 | 133.1 |
| Total amount of side chain having 3 carbon atoms and side chain having 4 carbon atoms (mol%) | 0.21 | 0.01 | 0.01 | 0.12 | 0.22 | 0.3 | 0.4 | 0.15 | 0.18 |
| Film thickness (μm) | 10.0 | 10.0 | 10.0 | 10.0 | 5.8 | 20.0 | 5.0 | 14.6 | 6.0 |
| Porosity P (%) | 45 | 36 | 36 | 45 | 45 | 41 | 35 | 38 | 46 |
| Air permeability (s/100cm$^3$) | 150 | 145 | 155 | 145 | 180 | 140 | 175 | 230 | 90 |
| Film thickness-equivalent air permeability Gt (s/100cm$^3$) | 15 | 15 | 16 | 15 | 31 | 7 | 35 | 16 | 15 |
| LN(Gt)-(-0.070×P+5.8) | 0.058 | -0.606 | -0.539 | 0.024 | 0.785 | -0.984 | 0.205 | -0.383 | 0.128 |
| Puncture strength (gf) | 460 | 525 | 400 | 460 | 200 | 1000 | 222 | 418 | 260 |
| Basis weight-equivalent puncture strength Sm (gf/(g/m$^2$)) | 88 | 86 | 66 | 88 | 66 | 89 | 72 | 49 | 84 |
| Shutdown temperature Ts (°C) | 139.5 | 141.5 | 138.0 | 140.0 | 136.0 | 133.0 | 135.7 | 137.2 | 138.6 |
| Ts-(0.13×Sm+130) | -1.9 | 0.3 | -0.6 | -1.4 | -2.6 | -8.6 | -3.6 | 0.9 | -2.4 |
| MD heat shrinkage rate at 120°C (%) | 9.5 | 4.5 | 3.5 | 8.5 | 15.4 | 25.0 | 10.5 | 7.6 | 6.8 |
| TD heat shrinkage rate at 120°C (%) | 15.5 | 3.3 | 2.5 | 15.1 | 23.9 | 24.0 | 15.7 | 5.9 | 16.7 |

(continued)

| Polyolefin film characteristics | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Rapid temperature increase test | The number of batteries that smoked or burst | 4 | 3 | 0 | 4 | 4 | 4 | 5 | 4 | 4 |
| | Assessment | C | C | A | C | C | C | C | C | C |
| Impact test | Cell temperature (largest among N = 5) (number) | 55 | 42 | 100< | 50 | 100< | 42 | 85 | 100< | 63 |
| | Assessment | A | A | C | A | C | A | B | C | B |
| Output test | Value of output characteristics (5 C capacity/1 C capacity) | 0.86 | 0.86 | 0.85 | 0.87 | 0.72 | 0.86 | 0.79 | 0.82 | 0.93 |
| | Assessment | B | B | B | B | C | B | C | B | A |
| The number of unmelted gel defects | Number (/ 1000m$^2$) | 20 | 0 | 4 | 16 | 20 | 0 | 35 | 16 | 18 |
| | Assessment | C | A | A | C | C | A | C | C | C |

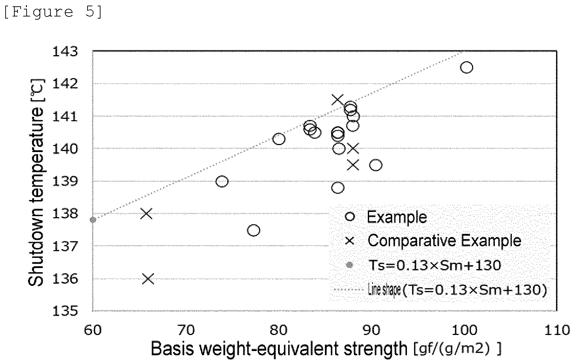

Figure 5 shows a graph in which the basis weight-equivalent puncture strengths Sm and the shutdown temperatures Ts of the polyolefin films of Examples 1 to 20 and Comparative Examples 1 to 6 were plotted on the basis of the results of Tables 3 to 8.

The present application claims priority to a Japanese Patent Application filed on September 29, 2021 (Japanese Patent Application No. 2021-159432), the contents of which are hereby incorporated by reference.

Reference Signs List

| 1: | polyolefin film |
|---|---|
| 2A and 2B: | nickel foil |
| 3A and 3B: | glass plate |
| 4: | electrical resistance measurement apparatus |
| 5: | thermocouple |
| 6: | thermometer |
| 7: | data collector |
| 8: | oven |

Claims

1. A polyolefin film comprising a polyolefin, wherein

    the polyolefin comprises polyethylene,
    a melting point of the polyolefin film is 134°C or higher and 140°C or lower,
    a basis weight-equivalent puncture strength Sm of the polyolefin film is 70 gf/(g/m$^2$) or more and 150 gf/(g/m$^2$) or less, and
    a shutdown temperature Ts and the Sm of the polyolefin film satisfy the following relationship:

$$Ts < 0.13 \times Sm + 130.$$

2. The polyolefin film according to claim 1, wherein a total amount of a side chain having 3 carbon atoms and a side chain having 4 carbon atoms measured for the polyolefin film is 0.1 mol% or less as a proportion to a total number of carbon atoms.

3. The polyolefin film according to claim 1 or 2, wherein the polyethylene comprises polyethylene A and polyethylene B different from the polyethylene A, wherein

    the polyethylene A is homopolyethylene having a melting point of 134°C or higher and 138°C or lower and a melt index of 0.5 g/10 min or more and 50 g/10 min or less, and
    a content of the polyethylene A based on 100 parts by mass in total of the polyethylene A and the polyethylene B is 20 parts by mass or more and 80 parts by mass or less.

4. The polyolefin film according to claim 3, wherein

    the polyethylene B is homopolyethylene having a viscosity average molecular weight of 800,000 or more and 5,000,000 or less, and
    a content of the polyethylene B based on 100 parts by mass in total of the polyethylene A and the polyethylene B is 20 parts by mass or more and 80 parts by mass or less.

5. The polyolefin film according to any one of claims 1 to 4, wherein a heat shrinkage rate at 120°C is 10% or less.

6. The polyolefin film according to any one of claims 1 to 5, wherein a film thickness-equivalent air permeability Gt and a porosity P of the polyolefin film satisfy the following relationship:

$$LN(Gt) \leq -0.070 \times P + 5.8.$$

**7.** The polyolefin film according to any one of claims 3 to 6, wherein a difference in swelling onset temperature between the polyethylene A and the polyethylene B determined by the following measurement is 10°C or less:

[Measurement of swelling onset temperature]

(Measurement of $D_{10}$, $D_{50}$, and $D_{90}$)

Respective particle diameters of the polyethylene A and the polyethylene B are measured using a laser particle size distribution analyzer with methanol as a dispersion medium. A cumulative particle size distribution from smaller particle sizes is prepared on the basis of the measurement, and particle diameters that attain cumulative percentages of 10%, 50%, and 90% are defined as $D_{10}$, $D_{50}$, and $D_{90}$, respectively, of each polyethylene.

(Measurement of swelling onset temperature T)

A swelling onset temperature $T_{10}$ of a polyethylene particle having a particle diameter of $D_{10}$ is determined as follows: polyethylene particles having a major axis diameter and a minor axis diameter (as for a plane figure of a particle observed under an optical microscope, a distance between parallel lines having the shortest interval is defined as the minor axis diameter of the particle, and a distance between parallel lines having the longest interval in a direction perpendicular thereto is defined as the major axis diameter of the particle) within a range of $D_{10} \pm 10\%$ are identified from a particle group of each polyethylene under an optical microscope, and one particle is arbitrarily collected therefrom. The collected one polyethylene particle is loaded onto a glass slide, and 0.05 mL of liquid paraffin is dropped to the polyethylene particle. Then, a glass cover is placed thereon so as to interpose the polyethylene particle.

Then, the glass slide is loaded onto a heat stage, and the temperature is allowed to increase from room temperature to 150°C under temperature increase conditions given below. The appearance of the polyethylene particle during temperature increase is photographed every 6 seconds under an optical microscope equipped with a camera. An equivalent circle diameter of the polyethylene particle is calculated from each of the obtained observation images. The lowest temperature at which the equivalent circle diameter of the polyethylene particle has become larger by 1% or more based on the equivalent circle diameter of the polyethylene particle at 80°C in a temperature range of 80°C or higher and 150°C or lower is defined as the swelling onset temperature of the polyethylene particle. Measurement is performed at 10 points, and an average value thereof is defined as a swelling onset temperature $T_{10}$ of each polyethylene.

(Temperature increase conditions)

Temperature increase rate from room temperature to 35°C: 5°C/min

Temperature increase rate in a range from 35°C to 80°C: 8°C/min

Temperature increase rate in a range from 80°C to 150°C: 5°C/min

Next, a swelling onset temperature $T_{50}$ of a polyethylene particle having a particle diameter of $D_{50}$, and a swelling onset temperature $T_{90}$ of a polyethylene particle having a particle diameter of $D_{90}$ are also determined in the same manner as in the swelling onset temperature $T_{10}$ using a collected polyethylene particle having a major axis diameter and a minor axis diameter within a range of $D_{50} \pm 10\%$, and a collected polyethylene particle having a major axis diameter and a minor axis diameter within a range of $D_{90} \pm 10\%$. Finally, the swelling onset temperature T of each polyethylene is determined as follows:

$$T = \frac{T_{10} + T_{50} + T_{90}}{3}$$

[Figure 1]

[Figure 2]

[Figure 3]

(A)

(B)

← Longitudinal direction →

2A
1

(C)

2B
15mm × 10mm

[Figure 4]

Weight

Round rod

Battery sample

[Figure 5]

# EP 4 410 880 A1

## INTERNATIONAL SEARCH REPORT

| International application No. |
|---|
| **PCT/JP2022/036587** |

### A. CLASSIFICATION OF SUBJECT MATTER

***C08J 9/26***(2006.01)i
FI:  C08J9/26 102; C08J9/26 CES

According to International Patent Classification (IPC) or to both national classification and IPC

### B. FIELDS SEARCHED

Minimum documentation searched (classification system followed by classification symbols)

C08J9/00-9/42;H01M50/40-50/497

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/256138 A1 (ASAHI KASEI KABUSHIKI KAISHA) 24 December 2020 (2020-12-24) | 1-2, 5 |
| | claims, paragraphs [0107]-[0164], example 19, tables 1-7, fig. 1-3 | |
| A | | 3-4, 6-7 |
| A | JP 2021-54075 A (TORAY INDUSTRIES) 08 April 2021 (2021-04-08) | 1-7 |
| A | WO 2014/034448 A1 (NATIONAL UNIVERSITY CORPORATION GUNMA UNIVERSITY) 06 March 2014 (2014-03-06) | 1-7 |
| A | KR 2021-0050037 A (W-SCOPE KOREA CO., LTD.) 07 May 2021 (2021-05-07) | 1-7 |
| A | JP 2018-162438 A (ASAHI KASEI KABUSHIKI KAISHA) 18 October 2018 (2018-10-18) | 1-7 |
| A | JP 2018-141029 A (ASAHI KASEI KABUSHIKI KAISHA) 13 September 2018 (2018-09-13) | 1-7 |

☐ Further documents are listed in the continuation of Box C.     ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

44

<div align="center">

**INTERNATIONAL SEARCH REPORT**
Information on patent family members

</div>

| | International application No. |
|---|---|
| | **PCT/JP2022/036587** |

| Patent document cited in search report | | | Publication date (day/month/year) | Patent family member(s) | | | Publication date (day/month/year) |
|---|---|---|---|---|---|---|---|
| WO | 2020/256138 | A1 | 24 December 2020 | EP 3988612 A1<br>claims, paragraphs [0110]-[0160], example 20, fig. 1-3<br>KR 10-2021-0148239 A<br>CN 113891912 A | | | |
| JP | 2021-54075 | A | 08 April 2021 | (Family: none) | | | |
| WO | 2014/034448 | A1 | 06 March 2014 | US 2015/0270521 A1<br>EP 2891677 A1<br>CN 104769027 A | | | |
| KR | 2021-0050037 | A | 07 May 2021 | (Family: none) | | | |
| JP | 2018-162438 | A | 18 October 2018 | CN 108623876 A<br>KR 10-2018-0108509 A | | | |
| JP | 2018-141029 | A | 13 September 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018141029 A
- JP 2019143142 A
- WO 2019093184 A
- JP 2021159432 A